# EUROPEAN PATENT APPLICATION

(11) **EP 4 464 670 A1**
(43) Date of publication of application: **20.11.2024**
(21) Application number: 24176561.9
(22) Date of filing: 17.05.2024
(51) Int. Cl.: C02F 3/30, C02F 1/28, C02F 3/20, C02F 103/00

(54) **SYSTEMS AND METHODS FOR TREATING STORMWATER WITH ANAMMOX BACTERIA**

(30) Priority: 19.05.2023 US 202363503427 P
(71) Applicant: REGENTS OF THE UNIVERSITY OF MINNESOTA, Minneapolis, MN 55455 (US)
(72) Inventor: NOVAK, Paige Jennifer, Minneapolis, 55455 (US); ERICKSON, Andrew Jacob, Minneapolis, 55455 (US); CHESTER, Anndee Lee Huff, Minneapolis, 55455 (US); SWEENEY, Mark E., Atlanta, 30328 (US); JOHNSON, Jeffrey P., Atlanta, 30328 (US)
(74) Representative: J A Kemp LLP

(57) **Abstract**

The present disclosure relates to stormwater treatment systems for attracting and retaining anaerobic ammonia oxidizing (anammox) bacteria, and methods of treating stormwater including ammonia using such stormwater treatment systems. The anammox bacteria is on carriers including zeolite. Select carriers include zeolite, select carriers do not include zeolite, select carriers are pre-seeded with the anammox bacteria, and select carriers are not pre-seeded with the anammox bacteria. The carriers are installed in the stormwater treatment systems in positions capable of contacting with the stormwater. The stormwater has a variable flow rate, and the system is capable of maintaining anammox bacteria growth when not in contact with the stormwater.

## Description

### CROSS-REFERENCE TO RELATED APPLICATIONS

This application claims priority to U.S. Provisional Patent Application Serial No. 63/503,427 filed May 19, 2023, which is incorporated herein in its entirety by reference.

### FIELD

The present disclosure generally relates to systems and methods for treating stormwater having a variable flow rate. More specifically, the present disclosure relates to stormwater treatment systems that enhance anammox retention and/or partial nitritation/anammox activity, methods of removing nitrogen from stormwater using the stormwater treatment systems, and the like.

### BACKGROUND

Stormwater runoff from urban areas contains a variety of pollutants, including sediments, nutrients, hydrocarbons, metals, and contaminants of emerging concern (CECs); if not mitigated, these pollutants can reach surface water and impact the ecological health of the system. Nutrients, such as nitrogen, are of increasing concern as they can cause eutrophication and loss of aquatic diversity. A national study in 2004 found that the average concentrations of ammonia, combined nitrite and nitrate, and Total Kjeldahl Nitrogen (TKN) in stormwater were 0.44±1.4 milligrams/Liter (mg/L), 0.60±0.97 mg/L, and 1.4 ±1.2 mg/L, respectively. Although average nitrogen concentrations in stormwater are relatively low, they can increase with storm event size, rain intensity, first flush, land use type, and season, impacting the overall nitrogen loads into surface water systems. According to the National Stormwater Quality Database, freeways had the highest concentrations of ammonia runoff, at an average of 1.07±1.3 mg/L. During peak flows, runoff from freeways has been reported to have ammonia concentrations as high as 12 mg/L and runoff from residential areas have had measured nitrite plus nitrate concentrations as high as 18 mg/L; stormwater from both freeways and residential areas have reported TKN concentrations as high as 36 mg/L. Seasonal affects, such as snow melt and dry and wet seasons, can also cause spikes in nitrogen loading. For example, in Minnesota, winter and spring seasons had the highest runoff nitrogen concentrations, with average total nitrogen (TN) of 3.4 mg/L and combined nitrite and nitrate of 0.71 mg/L. Other studies in the Southeast and Mid-Atlantic have also reported higher concentrations of ammonia in stormwater in the early wet season and during first flushes. Although much lower than other sources of nitrogen pollution to the environment, nitrogen species in stormwater can still have impacts on aquatic systems.

The Clean Water Act requires all states to control urban stormwater discharge and reduce pollutant loading prior to entering receiving water bodies. Examples of control measures include stormwater ponds, wetlands, swales, raingardens, bioretention systems, and vegetated biofilters. It was previously assumed that once organic nitrogen, ammonia, nitrate, or nitrite enters these stormwater control structures/systems, these species will be biologically degraded to harmless nitrogen gas (N₂). More recent studies, however, are finding that long-term, stormwater control systems can actually export nitrogen, increasing nitrogen loading to receiving waters via incomplete denitrification, temporary nitrogen removal via plant uptake, and re-mineralization of biologically incorporated nitrogen by primary producers. With climate change, increasing storm sizes and frequency are compounding this problem, leading to decreases in control measure residence times, nitrogen exports, and overall increases in urban stormwater nitrogen loading.

Bacteria are currently used to remove ammonia and nitrate from wastewater, turning it into harmless N₂ in a two-step process (ammonia to nitrate with air addition, then nitrate to N₂ with "food" (carbon/electron) addition). Though less expensive than chemical treatment technologies, this biological process is still expensive, energy intensive, and requires a great deal of space and careful process control.

### SUMMARY

The present disclosure is directed to alternative anaerobic nitrogen removal processes for enhancing nitrogen removal in stormwater systems. Although stormwater is distinct from wastewater in a number of ways as described through the present disclosure, it is similarly beneficial to provide systems and methods for the treatment of stormwater to remove ammonia, nitrite, and nitrate.

Microbes are known for being usable to remove nitrogen (e.g., ammonium, nitrite, nitrate, and organic nitrogen, and together, total nitrogen (TN)) from polluted waters. Removing TN from runoff or discharges is important to maintain the health of surface waters. While TN in urban runoff is dilute relative to other potential nitrogen sources, storm events can have a detrimental impact on surface water. Biological TN removal is attractive, as nitrogen can be completely removed from the system as harmless N₂ if aerobic nitrification can be coupled to anaerobic denitrification. Nitrification requires oxygen addition and denitrification requires a carbon source.

More recently, discovery of a short cut to the nitrogen cycle, a process called anaerobic ammonia oxidation (or "anammox") allows for complete nitrogen removal to N₂ in fewer steps with less oxygen. Approximately 25 years ago a novel type of bacteria was discovered that performed anammox. In this process, "anammox" bacteria are able to degrade ammonia directly to N₂ with only a small amount of air addition in smaller reactors.

Anammox is the autotrophic, anaerobic conversion of ammonium to nitrogen gas with nitrite as the electron acceptor (Eq. 1) and is performed by anammox bacteria. Anammox are slow growing but have been found in many environments, including wetlands. These bacteria partner with aerobic ammonium oxidizing microorganisms (AOM), which produce nitrite from some of the ammonium, facilitating the anammox process (Eq. 2).

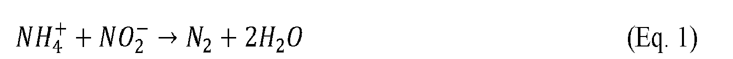

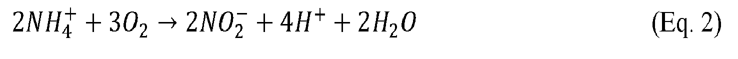

Anammox consumes nearly equal ratios of ammonium and nitrite, so some aeration or redox cycling is needed for nitrite formation by AOM. The anammox process has been used reliably for nitrogen removal in high-ammonium wastewater streams as well as in wetlands, indicating the potential for anammox to be deployed for TN removal in other applications.

The anammox process has the potential to greatly reduce the cost and energy intensity of ammonia removal in stormwater treatment systems while simultaneously improving surface water quality. Despite its significant promise, however, there are several problems with the anammox process: (1) anammox bacteria are notoriously slow growing and a method of retaining them in the treatment system is needed; and (2) controlling air addition to optimize the anammox process is difficult. As a result, implementation of the anammox process is limited. However, anammox tend to thrive in areas of high ammonium concentration. If anammox bacteria could be retained in a stormwater treatment system and ammonium could be concentrated, it might be possible to effectively utilize anammox for TN removal in runoff.

Zeolites are an alumina silica mineral with negatively charged nano-cages that can sorb ammonium cations on their surface. Even in their cheapest form, however, zeolites can be expensive and wash away due to the material's friable nature. To address this, plastic zeolite-coated biofilm carriers, so-called "coated pucks," provide a method of retaining zeolite and adsorbing ammonium, while also providing a surface for anammox microbes to grow on in an ammonium rich micro-environment. Such pucks can be deployed to facilitate redox cycling through wetting and drying cycles to enable the growth and retention of AOM and anammox microbes and achieve TN removal from urban runoff.

Accordingly, there is a need to improve the growth and retention of anammox bacteria in the stormwater treatment system. Additionally, there is a need for improved control of air addition to optimize the anammox process. The systems and methods should include cationic exchange media provided on the surface of a support, such as a membrane or polymer. The cationic exchange media, such as zeolites or a group of chemically related mineral substances that contain mainly hydrated aluminum and silicon compounds, can be selected to preferentially sorb ammonium from stormwater. The support can be selected to secure and/or support the cationic exchange media. The support can optionally be adapted to promote biofilm growth and retention of one or more of anammox bacteria, aerobic ammonia-oxidizing bacteria (AOB), and aerobic ammonia-oxidizing archaea (AOA). In addition, the support can optionally be adapted to facilitate partial nitritation by controlling the wetting of the pucks and their exposure to excess carbon via mulch addition, the placement of the pucks, and the height of drainage pipes during deployment. Further, the support can optionally be adapted to facilitate partial nitritation by controlling the delivery of oxygen to bacteria that generate nitrite (e.g., AOB, AOA, etc.), while optionally also suppressing the growth of nitrite oxidizing bacteria (NOB). In this way, the stormwater treatment systems attract and retain anammox bacteria by concentrating, on the surface of the support, ammonium-and optionally, either on the surface of the support or in a mixed-liquid system, nitrite-for use by anammox bacteria in the direct conversion of ammonium to dinitrogen gas in existing stormwater treatment reactors.

A first aspect of the present disclosure is to provide a stormwater treatment system for attracting and retaining anammox bacteria. The stormwater treatment system comprises a subsystem capable of receiving stormwater including ammonia, the stormwater having a variable flow rate. The stormwater treatment system comprises a plurality of carriers, the plurality of carriers being positioned within the stormwater treatment system to contact the ammonia in the stormwater received by the subsystem, remove a select amount of ammonia from the stormwater, and produce an exit stream with less total nitrogen content than the stormwater, wherein at least some of the plurality of carriers includes anammox bacteria. The stormwater treatment system maintains anammox bacteria growth when not in contact with the stormwater having the variable flow rate.

The stormwater treatment system of the first aspect may include, optionally, at least some of the plurality of carriers include zeolite and are unseeded.

The stormwater treatment system of the first aspect may include one or more of the previous embodiments and, optionally, at least some of the plurality of carriers include zeolite and are pre-seeded with a mixed culture enriched in anammox bacteria.

The stormwater treatment system of the first aspect may include one or more of the previous embodiments and, optionally, at least some of the plurality of carriers do not include zeolite and are pre-seeded with a mixed culture enriched in anammox bacteria.

The stormwater treatment system of the first aspect may include one or more of the previous embodiments and, optionally, the plurality of carriers includes a combination of unseeded zeolite-including carriers, zeolite-including carriers pre-seeded with anammox bacteria, and carriers that do not include zeolite and are pre-seeded with anammox bacteria.

The stormwater treatment system of the first aspect may include one or more of the previous embodiments and, optionally, the subsystem includes a raingarden, a stormwater treatment pond, or a stormwater collection vault or a dispersion well with at least one of an inlet, an outlet, and a storage vessel including a plurality of walls defining an inner cavity.

A second aspect of the present disclosure is to provide a stormwater treatment system for attracting and retaining anammox bacteria. The stormwater treatment system comprises a plurality of hard polymer pieces capable of being suspended in a mixed-liquid system. The plurality of hard polymer pieces is capable of contacting stormwater including ammonia and having a variable flow rate. The plurality of hard polymer pieces is adapted to promote biofilm growth and retention of one or more of anammox bacteria, aerobic ammonia- AOB, and AOA. The system attracts and retains anammox bacteria by concentrating, on the surface of the hard polymer pieces, the ammonia for use by the anammox bacteria. The system maintains anammox bacteria growth when the hard polymer pieces are not in contact with the stormwater having the variable flow rate.

The stormwater treatment system of the second aspect may include, optionally, at least some of the plurality of hard polymer pieces include zeolite and are unseeded.

The stormwater treatment system of the second aspect may include one or more of the previous embodiments and, optionally, at least some of the plurality of hard polymer pieces include zeolite and are pre-seeded with a mixed culture enriched in one or more of anammox bacteria, AOB, and AOA.

The stormwater treatment system of the second aspect may include one or more of the previous embodiments and, optionally, at least some of the plurality of hard polymer pieces do not include zeolite and are pre-seeded with a mixed culture enriched in one or more of anammox bacteria, AOB, and AOA.

The stormwater treatment system of the second aspect may include one or more of the previous embodiments and, optionally, the plurality of hard polymer pieces include a combination of unseeded zeolite-including hard polymer pieces, zeolite-including hard polymer pieces pre-seeded with a mixed culture enriched in one or more of anammox bacteria, AOB, and AOA, and hard polymer pieces that do not include zeolite and are pre-seeded with a mixed culture enriched in one or more of anammox bacteria, AOB, and AOA.

The stormwater treatment system of the second aspect may include one or more of the previous embodiments and, optionally, the mixed-liquid system includes a raingarden, a stormwater treatment pond, or a stormwater collection vault or a dispersion well with at least one of an inlet, an outlet, and a storage vessel including a plurality of walls defining an inner cavity.

The stormwater treatment system of the second aspect may include one or more of the previous embodiments and, optionally, the system includes at least one baffle or mechanism operable to control flow rate into, out of, or within the mixed-liquid system.

A third aspect of the present disclosure is to provide a method of treating stormwater. The method may include, but is not limited to, contacting a carrier in a stormwater treatment system with an influent stormwater stream containing at least ammonia, where the influent stormwater stream has a variable flow rate, and wherein at least some of the carriers includes anammox bacteria, and recovering an exit stream with less total nitrogen content than the influent stormwater stream.

The method of the third aspect may optionally include, but is not limited to, attracting and retaining anammox bacteria by concentrating the ammonia on the surface of the carrier for use by the anammox bacteria, and maintaining anammox bacteria growth when the carrier is not in contact with the stormwater having the variable flow rate.

The method of the third aspect may include one or more of the previous embodiments and, optionally, at least some of the carriers include zeolite and are unseeded. In some embodiments, at least some of the carriers include zeolite and are pre-seeded with a mixed culture enriched in anammox bacteria.

The method of the third aspect may include one or more of the previous embodiments and, optionally, at least some of the carriers do not include zeolite and are pre-seeded with a mixed culture enriched in anammox bacteria.

The method of the third aspect may include one or more of the previous embodiments and, optionally, the carriers include a combination of unseeded zeolite-including carriers, zeolite-including carriers pre-seeded with anammox bacteria, and carriers that do not include zeolite and are pre-seeded with anammox bacteria.

The method of the third aspect may include one or more of the previous embodiments and, optionally, the stormwater treatment system includes a raingarden, a stormwater treatment pond, or a stormwater collection vault or a dispersion well with at least one of an inlet, an outlet, and a storage vessel including a plurality of walls defining an inner cavity.

The method of the third aspect may include one or more of the previous embodiments and, optionally, wherein the stormwater treatment system comprises a subsystem capable of receiving the influent stormwater stream including at least ammonia, and wherein the plurality of carriers is positioned within the stormwater treatment system. The method may include, but is not limited to, contacting the ammonia in the influent stormwater stream received by the subsystem with the plurality of carriers. The method may include, but is not limited to, removing a select amount of ammonia from the influent stormwater stream. The method may include, but is not limited to, producing the exit stream with less total nitrogen content than the influent stormwater stream. The stormwater treatment system maintains anammox bacteria growth when not in contact with the influent stormwater stream having the variable flow rate.

The method of the third aspect may include one or more of the previous embodiments and, optionally, wherein the stormwater treatment system comprises a plurality of hard polymer pieces capable of being suspended in a mixed-liquid system. The plurality of hard polymer pieces is capable of contacting the influent stormwater stream including at least ammonia. The plurality of hard polymer pieces is adapted to promote biofilm growth and retention of one or more of anammox bacteria, aerobic ammonia-oxidizing bacteria (AOB), and aerobic ammonia-oxidizing archaea (AOA). The stormwater treatment system attracts and retains the anammox bacteria by concentrating, on a surface of the hard polymer pieces, the ammonia for use by the anammox bacteria. The stormwater treatment system maintains anammox bacteria growth when the hard polymer pieces are not in contact with the influent stormwater stream.

A fourth aspect of the present disclosure is to provide a stormwater treatment system including a collection unit capable of receiving stormwater including ammonia, and a plurality of zeolite carriers including anammox bacteria. The plurality of zeolite carriers is positioned within the stormwater treatment system to contact the stormwater including the ammonia received by the collection unit, removing a select amount of ammonia from the stormwater, initially through sorption, and producing an exit stream with less total nitrogen content than the stormwater.

A fifth aspect of the present disclosure is to provide a stormwater treatment system including a dispersion well capable of receiving stormwater including ammonia, and a plurality of zeolite carriers including anammox bacteria. The plurality of zeolite carriers is positioned within the stormwater treatment system to contact the stormwater including the ammonia received by the dispersion well, removing a select amount of ammonia from the stormwater, initially through sorption, and producing an exit stream with less total nitrogen content than the stormwater.

A sixth aspect of the present disclosure is to provide stormwater treatment systems including a plurality of hard polymer pieces capable of being suspended in a mixed-liquid system, and a plurality of zeolite particles provided on the surface of each of the plurality of hard polymer pieces. The plurality of the hard polymer pieces can be adapted to promote biofilm growth and retention of one or more of anammox bacteria, AOB, AOA, denitrifying bacteria, and combinations thereof. For example, the anammox bacteria, AOB, AOA, denitrifying bacteria, and/or combinations thereof may be pre-grown on the surface of the hard polymer pieces prior to deployment in a stormwater treatment system. The plurality of zeolite particles can be selected to preferentially adsorb ammonium from stormwater. The system attracts and retains anammox bacteria by concentrating, on the surface of the hard polymer pieces, the ammonium for use by the anammox bacteria. Air can be provided from any source to the mixed-liquid system to generate nitrite.

A seventh aspect of the present disclosure is to provide stormwater treatment systems including a plurality of zeolite particles provided on the surface of an air-permeable membrane, wherein the air-permeable membrane is adapted to controllably deliver air to bacteria that generate nitrite and the plurality of zeolite particles is selected to preferentially adsorb ammonium from stormwater. The stormwater treatment systems attract and retain anammox bacteria by concentrating, on the surface of the air-permeable membrane, the ammonium and nitrite for use and/or consumption by anammox bacteria.

An eighth aspect of the present disclosure is to provide stormwater treatment systems comprising a plurality of elongated air-permeable hollow fiber membranes spaced-apart and assembled into an array, each having a proximal end mounted to a header and an unmounted distal end freely extending therefrom, and a plurality of zeolite particles provided on (e.g., tethered to, or embedded, entrapped, or grown on) the surface of each of the plurality of elongated air-permeable hollow fiber membranes. The plurality of elongated air-permeable hollow fiber membranes is capable of contacting stormwater having a variable flow rate. The plurality of the elongated air-permeable hollow fiber membranes can be adapted to controllably deliver air to bacteria that generate nitrite. The plurality of zeolite particles can be selected to preferentially adsorb ammonium from stormwater. The system attracts and retains anammox bacteria by concentrating, on the surface of the elongated air-permeable hollow fiber membranes, the ammonium and nitrite for use by the anammox bacteria. The system maintains anammox bacteria growth when the elongated air-permeable hollow fiber membranes are not in contact with the stormwater having the variable flow rate.

The stormwater treatment systems of the eighth aspect may include optionally, the plurality of elongated air-permeable hollow fiber membranes comprises a polymer selected from polysulfone, polyethylene, polyvinylidene fluoride, polyacrylonitrile, polyethersulfone, polyvinylalcohol, cellulose acetate, regenerated cellulose, polymethylmethacrylate, or a combination thereof.

The stormwater treatment systems of the eighth aspect may include one or more of the previous embodiments and, optionally, the plurality of elongated air-permeable hollow fiber membranes comprises an inorganic material selected from alumina, silica, titania, zirconia, ceramics, metal oxides, or a combination thereof.

The stormwater treatment systems of the eighth aspect may include one or more of the previous embodiments and, optionally, the plurality of elongated air-permeable hollow fiber membranes has a sealed distal end for storing air.

The stormwater treatment systems of the eighth aspect may include one or more of the previous embodiments and, optionally, the plurality of elongated air-permeable hollow fiber membranes is further adapted to suppress the growth of nitrite-oxidizing bacteria.

The stormwater treatment systems of the eighth aspect may include one or more of the previous embodiments and, optionally, the plurality of elongated air-permeable hollow fiber membranes is assembled into a non-circular array.

The stormwater treatment systems of the eighth aspect may include one or more of the previous embodiments and, optionally, the plurality of elongated air-permeable hollow fiber membranes is assembled into the array in the absence of any supportive core.

The stormwater treatment systems of the eighth aspect may include one or more of the previous embodiments and, optionally, the plurality of zeolite particles comprises synthetic or natural zeolites selected from faujasite, clinoptilolite, zeolites with FAU framework, zeolites with HEU framework, cationic surfactant-functionalized zeolites, or a combination thereof.

The stormwater treatment systems of the eighth aspect may include one or more of the previous embodiments and, optionally, the plurality of zeolite particles is tethered to the surface of each of the plurality of elongated air-permeable hollow fiber membranes and wherein the plurality of zeolite particles includes zeolite particles modified with a functional group selected from amine, epoxy, and carboxyl groups.

The stormwater treatment systems of the eighth aspect may include one or more of the previous embodiments and, optionally, the plurality of zeolite particles is tethered to the surface of each of the plurality of elongated air-permeable hollow fiber membranes and wherein the plurality of elongated air-permeable hollow fiber membranes comprises a polymer membrane having a surface modified with a functional group selected from amine, epoxy, and carboxyl groups.

The stormwater treatment systems of the eighth aspect may include one or more of the previous embodiments and, optionally, the plurality of zeolite particles is embedded on the surface of the elongated air-permeable hollow fiber membranes and wherein the plurality of elongated air-permeable hollow fiber membranes includes a plasma-etched surface that exposes the embedded zeolite particles.

The stormwater treatment systems of the eighth aspect may include one or more of the previous embodiments and, optionally, the plurality of zeolite particles is entrapped on the surface of the elongated air-permeable hollow fiber membranes by a polymer and wherein the polymer is a polyamide that has been treated with an aqueous sodium hypochlorite solution to expose the entrapped zeolite particles.

The stormwater treatment systems of the eighth aspect may include one or more of the previous embodiments and, optionally, the header is configured to provide a jellyfish configuration or a rack configuration.

The stormwater treatment systems of the eighth aspect may include one or more of the previous embodiments and, optionally, the system maintains about 1% or less dissolved oxygen, optionally without human intervention.

A ninth aspect of the present disclosure is to provide methods of treating stormwater that include, but are not limited to, contacting a zeolite carrier including anammox bacteria in any of the stormwater treatment systems described herein with an influent stormwater stream containing at least ammonia, wherein the influent stormwater stream has a variable flow rate, and recovering an exit stream with less total nitrogen content than the influent stormwater stream.

The method of the ninth aspect may optionally include, but are not limited to, attracting and retaining anammox bacteria by concentrating, on the surface of the zeolite carrier for use by the anammox bacteria, and maintaining anammox bacteria growth when the zeolite carrier is not in contact with the stormwater having the variable flow rate.

The method of the ninth aspect may include one or more of the previous embodiments and may optionally include, but is not limited to, the stormwater treatment system includes carriers that are zeolite-coated (and are unseeded), carriers that are pre-seeded with a mixed culture enriched in anammox bacteria or anammox biomass (which may be zeolite-coated or may not be zeolite-coated), or a combination thereof. The zeolite-coated carriers are fabricated from porous, low-density polyethylene. Pre-seeding the carriers have an intended benefit of increasing the anammox biomass on the carriers deployed in stormwater treatment systems compared to biofilms grown naturally. In addition, pre-seeding carriers with an anammox-dominated enrichment prior to deployment may increase nitrogen cycling biomass. Further, the carrier material (e.g., zeolite) may or may not be as integral to the removal of ammonia and nitrite.

As used throughout the present disclosure, "anammox bacteria" refers to anaerobic ammonia oxidizing bacteria. The term "ammonia" refers to NH₃ and the term "ammonium" refers to NH₄⁺. As ammonia generally readily dissolves in water and is protonated at pH values less than approximately 9 to form ammonium, ammonia and ammonium may be used interchangeably herein, unless explicitly instructed otherwise.

As used throughout the present disclosure, "contacting" refers to the act of touching, making contact, or of bringing to close or immediate proximity, including at the cellular or molecular level, for example, to bring about a physiological reaction, a chemical reaction, or a physical change (e.g., in solution, in a reaction mixture, in vitro, or in vivo). Contacting may refer to bringing two or more components in proximity, such as physically, chemically, electrically, or some combination thereof. In one non-limiting example, mixing is a form of contacting.

As used throughout the present disclosure, "recovering" refers to obtaining any product resulting from a reaction or process. The product may include the product and one or more other chemical species.

As described throughout the present disclosure, "stormwater" may include water obtained from a source that requires treatment. For example, the stormwater may include water that contains a variety of pollutants, including sediments, nutrients, hydrocarbons, metals, and CECs. By way of another example, the stormwater may be obtained from or include one or more of water from or associated with runoff from parking surfaces, roadways, sidewalks, building courtyards, fields, or the like.

The Summary is neither intended nor should it be construed as being representative of the full extent and scope of the present disclosure. The present disclosure is set forth in various levels of detail in the Summary as well as in the attached drawings and the Detailed Description and no limitation as to the scope of the present disclosure is intended by either the inclusion or non-inclusion of elements, components, etc. in this Summary. Additional aspects of the present disclosure will become clearer from the Detailed Description, particularly when taken together with the drawings.

The phrases "at least one," "one or more," and "and/or," as used herein, are open-ended expressions that are both conjunctive and disjunctive in operation. For example, each of the expressions "at least one of A, B and C," "at least one of A, B, or C," "one or more of A, B, and C," "one or more of A, B, or C," and "A, B, and/or C" means A alone, B alone, C alone, A and B together, A and C together, B and C together, or A, B and C together.

The term "a" or "an" entity, as used herein, refers to one or more of that entity. As such, the terms "a" (or "an"), "one or more", and "at least one" can be used interchangeably herein.

Unless otherwise indicated, all numbers expressing quantities, dimensions, conditions, ratios, ranges, and so forth used in the specification and claims are to be understood as being modified in all instances by the term "substantially", "about", or "approximately". Accordingly, unless otherwise indicated, all numbers expressing quantities, dimensions, conditions, ratios, angles, ranges, and so forth used in the specification and claims may be increased or decreased by approximately plus or minus 10%, and optionally plus or minus 5%, to achieve satisfactory results. In addition, where the meaning of the terms "substantially", "about", or "approximately" as used herein would not otherwise be apparent to one of ordinary skill in the art, the terms "substantially", "about", and "approximately" should be interpreted as meaning within plus or minus 10% of the stated value.

The term "parallel" means two objects are oriented at an angle within plus or minus 0° to 5° unless otherwise indicated. Similarly, the term "perpendicular" means two objects are oriented at angle of from 85° to 95° unless otherwise indicated. Unless otherwise indicated, the term "substantially" indicates a difference from 0% to 5% of the stated value is acceptable. All ranges described herein may be reduced to any sub-range or portion of the range, or to any value within the range without deviating from the disclosure. For example, the range "5 to 55" includes, but is not limited to, the sub-ranges "5 to 20" as well as "17 to 54."

The use of "including", "comprising", or "having" and variations thereof herein is meant to encompass the items listed thereafter and equivalents thereof as well as additional items. Accordingly, the terms "including", "comprising", or "having" and variations thereof can be used interchangeably herein.

It shall be understood that the term "means" as used herein shall be given its broadest possible interpretation in accordance with 35 U.S.C. § 112(f). Accordingly, a claim incorporating the term "means" shall cover all structures, materials, or acts set forth herein, and all the equivalents thereof. Further, the structures, materials, or acts and the equivalents thereof shall include all those described in the Summary, Brief Description of the Drawings, Detailed Description, Abstract, and Claims themselves.

Unless otherwise stated, any embodiment described throughout the disclosure should be understood as being individually implementable and/or combinable with any other embodiment or embodiments described throughout the disclosure.

### BRIEF DESCRIPTION OF THE DRAWINGS

The accompanying drawings, which are incorporated in and constitute a part of the specification, illustrate embodiments of the disclosed system that are non-limiting and non-exhaustive. Together with the general description of the disclosure given above and the detailed description of the drawings given below, the accompanying drawings serve to explain the principles of the disclosed system(s) and device(s). In the drawings:
FIG. 1 is a schematic diagram of a hollow tube for use in a stormwater treatment system, according to one or more embodiments of the present disclosure;
FIG. 2 is a schematic diagram of a hard polymer piece or carrier for enhancing anammox retention, among other things, according to one or more embodiments of the present disclosure;
FIG. 3A is a schematic diagram of a treatment system in a jellyfish configuration, according to one or more embodiments of the present disclosure;
FIG. 3B is a schematic diagram of a treatment system in a rack configuration, showing a top view, perspective view, and side view, according to one or more embodiments of the present disclosure;
FIG. 4 is a flowchart of a method of removing nitrogen from stormwater, according to one or more embodiments of the present disclosure;
FIG. 5A is an example embodiment of a stormwater collection system, according to one or more embodiments of the present disclosure;
FIG. 5B is an example embodiment of the stormwater collection system of 5A;
FIG. 5C is an example embodiment of the stormwater collection system of 5A;
FIG. 6A is an example embodiment of a stormwater drainage system, according to one or more embodiments of the present disclosure;
FIG. 6B is an example embodiment of the stormwater drainage system of 6A;
FIG. 7A is an example embodiment of a flow-through stormwater treatment system, according to one or more embodiments of the present disclosure;
FIG. 7B is an example embodiment of a flow-through stormwater treatment system, according to one or more embodiments of the present disclosure;
FIG. 7C is an example embodiment of the flow-through stormwater treatment system of FIG. 7B;
FIG. 7D is an example embodiment of the flow-through stormwater treatment system of FIG. 7B;
FIG. 8A is an example stormwater treatment structure capable of housing anammox carriers, according to one or more embodiments of the present disclosure;
FIG. 8B is an example stormwater treatment structure capable of housing the anammox carriers of 8A;
FIG. 9 is a graphical view of ammonia concentration versus time during analysis of a removal rate of ammonium from stormwater by zeolite-coated carriers, according to one or more embodiments of the present disclosure;
FIG. 10A is an example mesh bag capable of housing anammox carriers, according to one or more embodiments of the present disclosure;
FIG. 10B is an example mesh bag capable of housing anammox carriers, according to one or more embodiments of the present disclosure;
FIG. 11 is a graphical view of temperature and discharge versus monitored day for a stormwater treatment pond, according to one or more embodiments of the present disclosure;
FIG. 12A is a graphical view of gene copy numbers versus day from carrier samples deployed in a raingarden, including 16S rRNA copies versus day, according to one or more embodiments of the present disclosure;
FIG. 12B is a graphical view of gene copy numbers versus day from carrier samples deployed in a raingarden, including *amoA* copies versus day, according to one or more embodiments of the present disclosure;
FIG. 12C is a graphical view of gene copy numbers versus day from carrier samples deployed in a raingarden, including Amx copies versus day, according to one or more embodiments of the present disclosure;
FIG. 13A is a graphical view of gene copy numbers versus day from carrier samples deployed in a stormwater treatment pond system, including 16S rRNA copies versus day, according to one or more embodiments of the present disclosure;
FIG. 13B is a graphical view of gene copy numbers versus day from carrier samples deployed in a stormwater treatment pond system, including *amoA* copies versus day, according to one or more embodiments of the present disclosure;
FIG. 13C is a graphical view of gene copy numbers versus day from carrier samples deployed in a stormwater treatment pond system, including Amx copies versus day, according to one or more embodiments of the present disclosure;
FIG. 14 is an example stormwater reactor configuration, according to one or more embodiments of the present disclosure;
FIG. 15A is a graphical view of gene copy numbers or water quality parameters versus time in water from a model stormwater treatment reactor containing control or zeolite-coated carriers pre-seeded with pond water, including percentage ammonia removed versus time, according to one or more embodiments of the present disclosure;
FIG. 15B is a graphical view of gene copy numbers or water quality parameters versus time in water from a model stormwater treatment reactor containing control or zeolite-coated carriers pre-seeded with pond water, including 16S rRNA copies versus time, according to one or more embodiments of the present disclosure;
FIG. 15C is a graphical view of gene copy numbers or water quality parameters versus time in water from a model stormwater treatment reactor containing control or zeolite-coated carriers pre-seeded with pond water, including *amoA* copies versus time, according to one or more embodiments of the present disclosure;
FIG. 15D is a graphical view of gene copy numbers or water quality parameters versus time in water from a model stormwater treatment reactor containing control or zeolite-coated carriers pre-seeded with pond water, including Amx copies versus time, according to one or more embodiments of the present disclosure;
FIG. 16A is a graphical view of nitrate concentrations versus time in water from a model stormwater treatment reactor containing control or zeolite-coated carriers pre-seeded with pond water, according to one or more embodiments of the present disclosure;
FIG. 16B is a graphical view of nitrate concentrations versus time in water from a model stormwater treatment reactor containing control or zeolite-coated carriers pre-seeded with an anammox enrichment culture, according to one or more embodiments of the present disclosure;
FIG. 17A is a graphical view of gene copy numbers or water quality parameters versus time in water from a model stormwater treatment reactor containing control or zeolite-coated carriers pre-seeded with an anammox enrichment culture, including percentage ammonia removed versus time, according to one or more embodiments of the present disclosure;
FIG. 17B is a graphical view of gene copy numbers or water quality parameters versus time in water from a model stormwater treatment reactor containing control or zeolite-coated carriers pre-seeded with an anammox enrichment culture, including 16S rRNA copies versus time, according to one or more embodiments of the present disclosure;
FIG. 17C is a graphical view of gene copy numbers or water quality parameters versus time in water from a model stormwater treatment reactor containing control or zeolite-coated carriers pre-seeded with an anammox enrichment culture, including *amoA* copies versus time, according to one or more embodiments of the present disclosure; and
FIG. 17D is a graphical view of gene copy numbers or water quality parameters versus time in water from a model stormwater treatment reactor containing control or zeolite-coated carriers pre-seeded with an anammox enrichment culture, including Amx copies versus time, according to one or more embodiments of the present disclosure.

The drawings are not necessarily (but may be) to scale. In certain instances, details that are not necessary for an understanding of the disclosure or that render other details difficult to perceive may have been omitted. It should be understood, of course, that the disclosure is not necessarily limited to the embodiments illustrated herein. As will be appreciated, other embodiments are possible using, alone or in combination, one or more of the features set forth above or described below. For example, it is contemplated that various features and devices shown and/or described with respect to one embodiment may be combined with or substituted for features or devices of other embodiments regardless of whether or not such a combination or substitution is specifically shown or described herein.

The following is a listing of components according to various embodiments of the present disclosure, and as shown in the drawings:

| Number | Component |
|---|---|
| 100 | Hollow Tube or Carrier |
| 101 | Zeolites |
| 102A | Aerobic Ammonia-Oxidizing Bacteria (AOB) |
| 102B | Aerobic Ammonia-Oxidizing Archaea (AOA) |
| 103A | Provided Air |
| 103B | Expelled Air |
| 104 | Anammox Bacteria |
| 200 | Hard Polymer Piece or Carrier |
| 300 | Carrier |
| 301 | Hollow Fiber Membranes |
| 302 | Header |
| 400 | Method |
| 401 | Contacting a Treatment |
| 402 | Recovering an Exit Stream |
| 500 | Fluid Collection and Storage System |
| 502 | Above-Grade Structure |
| 504 | Substrate |
| 504A | Substrate |
| 504B | Substrate |
| 506 | Void |
| 506A | Void |
| 506B | Void |
| 508 | Collection Unit or Module |
| 508A | Collection Unit or Module |
| 508B | Collection Unit or Module |
| 510 | Zeolite Carrier with Anammox |
| 512 | Access Port |
| 514 | Exit Conduit |
| 516 | Connecting Conduit |
| 600 | Stormwater Drainage System |
| 602 | Dispersion Well |
| 602A | Dispersion Well |
| 602B | Dispersion Well |
| 604 | Well Inlet |
| 606 | Inlet Conduit |
| 608 | Outlet Conduit |
| 610 | Connecting Conduit |
| 700 | Stormwater Treatment System |
| 702 | Layer |
| 702A | Layer |
| 702B | Layer |
| 702C | Layer |
| 704 | Underdrain Pipe |
| 706 | Outlet Pipe |
| 708 | Layer Height |
| 708A | Layer Height |
| 708B | Layer Height |
| 708C | Layer Height |
| 710 | Media Depth |
| 712 | Overhead Height |
| 714 | Material Thickness |
| 716 | Total System Height |
| 718 | Opening |
| 718A | Opening |
| 718B | Opening |
| 718C | Opening |
| 720 | Biofiltration Chamber |
| 722 | Access Hatch |
| 724 | Bypass Weir/Outlet Bay |
| 726 | Top Slab |
| 728 | Top Slab Height |
| 730 | Settling Structure |
| 732 | Inlet Location |
| 734 | Outlet Pipe |
| 736 | Slab Width |
| 738 | System Width |
| 740 | Slab Length |
| 742 | System Length |
| 744 | Opening Width |
| 800 | System |
| 802 | Structures |
| 804 | Floor |
| 806 | Walls |
| 808 | Lid |
| 810 | Cavity |
| 812 | Media |
| 814 | Underdrain Pipe |
| 816 | Partitions |
| 818 | Chambers |
| 820 | Inlet Header |
| 822 | Outlet Structures |
| 900 | Graphical View |
| 1000 | Container |
| 1002 | Carrier |
| 1004 | Anammox Bacteria |
| 1100 | Graphical View |
| 1200 | Graphical View |
| 1210 | Graphical View |
| 1220 | Graphical View |
| 1300 | Graphical View |
| 1310 | Graphical View |
| 1320 | Graphical View |
| 1400 | Reactor Configuration |
| 1402 | Influent |
| 1404 | Pump |
| 1406 | Reactor |
| 1408 | Carriers |
| 1410 | Ammonium Zone |
| 1412 | Effluent |
| 1414 | Side Port |
| 1500 | Graphical View |
| 1510 | Graphical View |
| 1520 | Graphical View |
| 1530 | Graphical View |
| 1600 | Graphical View |
| 1610 | Graphical View |
| 1700 | Graphical View |
| 1710 | Graphical View |
| 1720 | Graphical View |
| 1730 | Graphical View |

### DETAILED DESCRIPTION

The present disclosure relates to systems for treating stormwater, methods of treating stormwater, and the like. The treatment systems reduce the cost and energy intensity required for total nitrogen removal from stormwater by utilizing a combined partial nitritation and anaerobic ammonia oxidation ("anammox") system. Carriers including zeolite collect ammonium from stormwater, and anammox bacteria on the carriers degrade ammonia and nitrite directly to N₂ with only a small amount of air addition for partial nitrite production in stormwater treatment systems. Through careful material selection and engineering design, the treatment systems address two challenges commonly encountered in this biological process. First, notoriously slow growth of the anammox bacteria is solved by modifying the material surfaces such that ammonia is concentrated directly on the surface and selective colonization of the anammox bacteria is stimulated. Also, in some embodiments, a jellyfish or "rack" shape of the material with a bundle of or parallel spaced strings is used to further enhance the growth and retention of anammox bacteria in the reactor. Second, the strings are constructed of hollow tubes with one closed or sealed end to allow air to fill the hollow space and permit controlled air delivery through the walls of the tubes to achieve optimal conditions for partial nitrite production and therefore anammox bacteria growth and total ammonia/nitrate removal.

Embodiments of the present disclosure are directed to systems and methods for treating stormwater with anammox bacteria. The anammox bacteria can be naturally enriched from the environment on a carrier including zeolite structures; the anammox bacteria can also be supplied through pre-seeding the carrier (either zeolite-containing or not), with a mixed culture enriched with anammox. The zeolite is suitable for sorbing or immobilizing ammonium ions from the stormwater, and the anammox converts the ammonium to nitrogen gas. The carriers are installable in stormwater treatment systems and/or stormwater drainage systems.

U.S. Patent No. 10,894,732, issued January 19, 2021, (the '732 Patent) describes the use of treating wastewater with zeolite structures and anammox bacteria, and is incorporated herein by reference in its entirety. It is noted that treating stormwater requires different considerations than treating wastewater as described in the '732 Patent.

Monitoring and controlling system parameters in a wastewater treatment system needs to be active and/or constant, given the constant and consistent flow of wastewater into the wastewater treatment system. In contrast, monitoring and controlling system parameters in a stormwater treatment system can be more passive and/or infrequent, given the (often) periodic nature of the flow of stormwater into the stormwater treatment system. The flow of stormwater can be intermittent and inconsistent, potentially to the point of extremes (e.g., after a rain, street cleaning, or opening of fire hydrant on manufactured surfaces, after initial or first runoff from fields, etc. versus extended periods of drought). This results in the wastewater treatment system likely having a more easily controlled contact time between the wastewater and the anammox, versus the stormwater treatment system having a less easily controlled contact time between the stormwater and the anammox. In addition, this results in the stormwater treatment system being more likely to experience a dry period, whereas the wastewater treatment system will be less likely to experience a dry period. This dry period may cause the anammox bacteria to die off or recede, rendering it less likely to be known that anammox bacteria is present in the stormwater treatment system, as compared to the wastewater treatment system.

Ammonia concentrations observed in wastewater treatment systems are often consistent within a predefined range and high (e.g., approximately 40 milligrams*Newton/Liter (mg-N/L)). In contrast, ammonia concentrations observed in stormwater treatment systems may be inconsistent (e.g., increasing with first run-offs from manufactured surfaces such as concrete / asphalt streets or parking surfaces or non-manufactured surfaces such as fields), and generally lower in amount (e.g., approximately 2 mg-N/L). An amount of stormwater cations and anions (e.g., such as ionic strength/competition) in the stormwater treatment system may be lower as compared to the higher amount of wastewater cations and anions in the wastewater treatment system.

Wastewater treatment systems are generally configured to buffer the wastewater to fluctuations in ambient temperatures. In contrast, stormwater treatment systems can potentially expose the stormwater to fluctuations. Similarly, the temperature of the wastewater treatment flows may be higher and more consistent, as compared to the lower and more variable stormwater treatment flows.

Wastewater treatment systems are able to control the oxidation-reduction potential of the surrounding water (or redox), while stormwater treatment systems may or may not be able to control redox. In some embodiments, controlling redox includes the addition of mulch or controlling the height of the discharge pipe to maintain periods of wetting. Wastewater treatment system also have an expected amount of denitrifying bacteria present, as there is plenty of carbon supplied to the system that enables the growth of denitrifying bacteria. In contrast, stormwater treatment systems may not have denitrifying bacteria present because the carbon concentrations are variable and often low.

Due to the open nature of the stormwater treatment system, which may be employed to collect stormwater as run-off from manufactured surfaces such as concrete / asphalt streets or parking surfaces or non-manufactured surfaces such as fields, animal pests are possible within the stormwater treatment system. In contrast, the wastewater treatment system is generally closed, being fed by indoor plumbing or other similar sources of wastewater, resulting in a lower possibility of animal pests within the system.

To address these differences, employing zeolite anammox in stormwater treatment systems may implement a number of distinct changes.

The lower ammonia concentration in stormwater and/or the difficult control of stormwater may require different quantities of carriers and/or carriers of different dimensions (e.g., different surface area) than those usable in wastewater treatment systems. In addition, the quantity of zeolite on the carriers may be adjusted. Further, pre-seeded carriers or a mix of pre-seeded and unseeded carriers may be included. Further, the location of the carriers within the stormwater treatment system may need to be adjusted. Similarly, adjusting for dry periods in the stormwater treatment system may require different quantities of carriers, the re-seeding of carriers, and/or replacing carriers at different frequencies or time intervals.

Where the zeolite carriers are pre-seeded, the pre-seeding parameters may be adjusted to increase the known certainty of anammox bacteria present in the stormwater treatment system. In addition, adjusting the pre-seeding parameters may cause denitrifying bacteria to be present by specifically adding them to the seeding mixture.

The elevation of an outlet from the stormwater treatment system may also be adjusted to alter the flow of the stormwater and/or to control redox, allowing the system to stay wet and therefore allowing it to become anaerobic. In addition, the placement and/or method of securing the carriers within the stormwater treatment system may be adjusted to alter the flow of the stormwater.

In this regard, a stormwater treatment system employing anammox carriers requires additional considerations as compared to a wastewater treatment system employing anammox carriers, as described in greater detail below.

Embodiments of the present disclosure describe stormwater treatment systems comprising cationic exchange media provided on the surface of a support, such as a membrane, polymer, or other solid. The cationic exchange media can be selected to preferentially sorb ammonium from stormwater. The support can be selected to support the cationic exchange media and provide durability over extended periods of time (e.g., months, or beyond). In some embodiments, the support is adapted to promote biofilm growth and retention of one or more of anammox bacteria, aerobic ammonia-oxidizing bacteria (AOB), and aerobic ammonia-oxidizing archaea (AOA). In some embodiments, the support is adapted to facilitate partial nitritation by controlling the delivery of oxygen to bacteria that generate nitrite (e.g., AOB, AOA, etc.). For example, controlling the delivery of oxygen may occur through a process called wetting. In some embodiments, controlling the redox via mulch addition and changing the height of the drainage pipe can also suppress growth of nitrite oxidizing bacteria (NOB). Further, in some embodiments the controlling of delivery of air-whether continuous or intermittent-can also suppress the growth of NOB. In this way, the systems attract and retain anammox bacteria by concentrating, on the surface of the support, ammonium-and optionally, either on the surface of the support or in a mixed-liquid system, nitrite-for use by anammox bacteria.

The cationic exchange media can include or be selected from any material suitable for sorbing or immobilizing ammonium ions. Examples of suitable cationic exchange media include, but are not limited to, zeolites, clays, activated carbon, derivatives thereof, and the like. In many embodiments, the cationic exchange media includes a material that preferentially exchanges (also referred to throughout as sorbing or adsorbing) ammonium ions. For example, zeolites, whether synthetic or natural, preferentially sorb ammonium ions and thus are an example of an exemplary material. In general, the zeolites may be provided as differently sized zeolite particles or zeolite beads, among other forms. The zeolite may include one or more of a natural zeolite and a synthetic zeolite. For example, the zeolite may include natural zeolites such as faujasite (FAU) or clinoptilolite (HEU), and/or synthetic zeolites such as zeolites with a FAU framework or HEU framework. In addition or in the alternative, the zeolite may include cationic surfactant-functionalized zeolites. Other materials can be used herein without departing from the scope of the present disclosure.

The support can include materials selected from organic materials, inorganic materials, or hybrid organic-inorganic materials. In some embodiments, the support comprises a polymer material. The polymer material can be provided in the form of a hollow fiber membrane, a blended polymer membrane, a polymeric flat sheet, or a three-dimensional hard polymer, among other forms, for operation or use in a plug flow reactor, completely mixed reactor, or fluidized bed, among other reactors. Non-limiting examples of suitable polymer materials include polymers selected from polysulfone, polyethylene, polyvinylidene fluoride, polyacrylonitrile, polyethersulfone, polyvinylalcohol, cellulose acetate, regenerated cellulose, polymethylmethacrylate, and the like. In other embodiments, the support comprises inorganic materials selected from alumina, silica, titania, zirconia, ceramics, metal oxides, and the like. In other embodiments, the support comprises hybrid organic-inorganic materials, which can include, but are not limited to, any combination of the organic and inorganic materials disclosed herein, as well as organometallic complexes, coordination complexes, and the like. In some embodiments, the support includes a membrane (e.g., air-permeable membrane). In some embodiments, the support includes hard polymer pieces.

The support can be adapted to controllably deliver oxygen to bacteria that generate nitrite, or air can be supplied by other means to generate nitrite, which can be employed in instances where solids such as hard polymer pieces are used.

The cationic exchange media is provided on the surface of the support. In some embodiments, the cationic exchange media is tethered (e.g., covalently attached) to the surface of the support. In these embodiments, the stormwater treatment systems can comprise cationic exchange media modified with functional groups, supports modified with functional groups, or both. In one embodiment, the systems comprise zeolite particles modified with functional groups, wherein the modified zeolite particles are tethered to a support comprising a polymer material modified with functional groups. The functional groups are not particularly limited. For example, the functional groups for modifying either the zeolite particles or supports can be selected from amine, epoxy, and carboxyl groups, among others.

In some embodiments, the cationic exchange media is embedded in or on the surface of the support. For example, in one embodiment, the stormwater treatment system comprises a plurality of zeolite particles embedded in or on the surface of the support, wherein the support comprises a polymer material. This can be performed by, for example, adding zeolite particles to a polymer dope solution prior to casting. In some embodiments, the stormwater treatment systems comprise a plasma-etched surface that exposes the embedded cationic exchange media, such as embedded zeolites. In some embodiments, the zeolite is trapped in a pore network in a porous polymer where one phase has been etched away, leaving the zeolite behind.

In some embodiments, the cationic exchange media is entrapped on the surface of the support by a polymer layer, such as a polyamide. For example, in one embodiment, the stormwater treatment system comprises a plurality of zeolite particles entrapped by a polyamide layer on the surface of the support. In some embodiments, the polymer layer is a layer that has been treated with a solution, such as aqueous sodium hypochlorite, to expose the entrapped zeolite. In other embodiments, the cationic exchange media (e.g., zeolite) is grown on the surface of the support. In other embodiments, one or more of an ultraviolet light treatment and silane treatment may be used to modify one or more of the support (e.g., polymer material) and the cationic exchange media (e.g., zeolite).

Embodiments of the present disclosure describe stormwater treatment systems including a plurality of zeolite particles provided on the surface of an air-permeable membrane, wherein the air-permeable membrane is adapted to controllably deliver air to bacteria that generate nitrite and the plurality of zeolite particles is selected to preferentially adsorb ammonium from stormwater. The stormwater treatment systems attract and retain anammox bacteria by concentrating, on the surface of the air-permeable membrane, the ammonium and nitrite for use and/or consumption by anammox bacteria.

In some embodiments, the stormwater treatment systems comprise a zeolite-functionalized polymer material or inorganic material, which may be provided as a film or membrane, among other forms. In many embodiments, the systems for treating stormwater may comprise a polymer material and a zeolite, wherein the zeolite may adsorb or selectively adsorb ammonium. In other embodiments, the systems for treating stormwater may comprise a polymer material and one or more of a zeolite and a cationic surfactant-functionalized zeolite, wherein the zeolite may adsorb or selectively adsorb ammonium and the cationic surfactant-functionalized zeolite may adsorb or selectively adsorb nitrite. In addition or in the alternative, in some embodiments, the system may include other charged particles and/or chemical groups that function in the same manner, adsorbing/exchanging ammonium and/or nitrite.

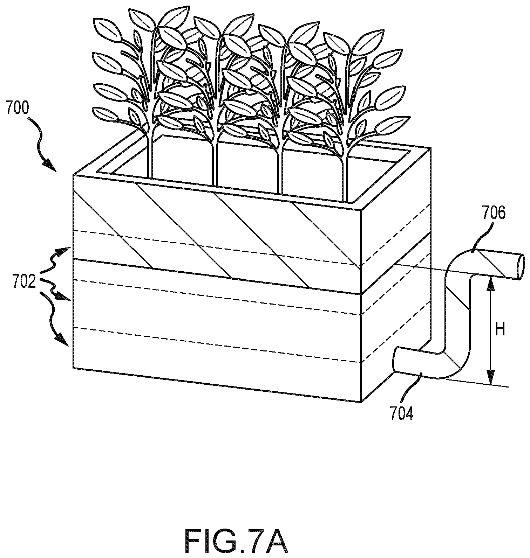

Carriers fabricated from a polymer or inorganic material may be provided as a hollow fiber membrane, a blended membrane, a flat sheet, or a three-dimensional hard polymer or inorganic, among other forms, for operation or use in a raingarden, a swale, a flow-through device designed as a plug flow reactor, completely mixed reactor, or fluidized bed, among other reactors, or an above-ground or below-ground stormwater collection and treatment system that does or does not include vegetation or other growth layers (e.g., as illustrated in FIG. 7A). In general, systems in which the carriers may be suspended may be considered mixed-liquid systems, without departing from the scope of the present disclosure. The polymer material may include, but is not limited to, one or more of polysulfone, polyethylene, polyvinylidene fluoride, polyacrylonitrile, polyethersulfone, polyvinylalcohol, cellulose acetate, regenerated cellulose, polymethylmethacrylate, and inorganics.

The zeolite may be provided as differently sized zeolite particles or zeolite beads on / in carriers, among other forms. The zeolite on /in the carriers may include one or more of a natural zeolite and a synthetic zeolite. For example, the zeolite may include natural zeolites, such as clinoptilolite or faujasite. The zeolite on / in the carriers may include synthetic zeolites, such as zeolites with a FAU framework or HEU framework. In addition or in the alternative, the zeolite on / in the carriers may include cationic surfactant-functionalized zeolites.

The zeolite may be covalently attached or tethered to or near a surface of the polymer material or inorganic material, or may be embedded or entrapped on or near a surface of the membrane. In some embodiments, the membrane and/or the zeolite may be modified with functional groups sufficient to tether or attach the zeolite to, or embed the zeolite in, the membrane or a surface of the membrane. For example, the systems may include a polymer material modified with functional groups, zeolite particles modified with functional groups, or both. The functional groups are not particularly limited. For example, in some embodiments, one or both of the membrane and zeolite particles is modified with functional groups selected from amine, epoxy, and carboxyl groups. In some embodiments, the zeolite is embedded in a surface of the membrane. In these embodiments, the membrane may include a plasma-etched surface that exposes the embedded zeolite. In some embodiments, the zeolite is entrapped on the surface of the membrane by a second polymer, such as a polyamide. In some embodiments, the zeolite is trapped in a pore network in a porous polymer where one phase has been etched away, leaving the zeolite behind. In these embodiments, the second polymer may be treated with a solution, such as aqueous sodium hypochlorite, to expose the entrapped zeolite. In some embodiments, the zeolite is grown on the surface of a membrane and/or an inorganic or organic (polymer) material. In some embodiments, one or more of an ultraviolet light treatment and silane treatment may be used to modify one or more of the polymer material and the zeolite. Polymer materials and zeolites modified in these ways may provide systems with enhanced coverage of zeolites, while retaining and/or securing zeolites to a membrane and/or a surface for a period of time sufficient for treatment of stormwater.

In one embodiment, the stormwater treatment system may comprise a surface-modified polysulfone membrane as a polymer material and faujasite as a zeolite, wherein the faujasite may readily adsorb ammonium ions. A surface of the polysulfone membrane and the zeolite may be treated sufficient for the zeolite to attach to the polysulfone membrane. For example, in an embodiment, each of the surface of the polysulfone membrane and the zeolite may be subj ected to ultraviolet light and a silane treatment. The treated zeolite may attach to the treated surface of the polysulfone membrane with good coverage.

The zeolites provided (e.g., attached, or embedded) on or near a surface of the polymer material may selectively adsorb one or more of ammonium to the exclusion or substantial exclusion of other chemical species. The zeolites' selectivity for ammonium may allow ammonium to be concentrated on a surface of the polymer material to provide a localized ammonium-rich environment that is favorable for the attraction, colonization, and retention of the anammox bacteria. For example, the zeolite may preferentially attract and/or retain the anammox bacteria. The anammox bacteria may be selectively retained on or near a surface of the polymer material/zeolite without simultaneously retaining unwanted bacteria, such as NOB. For example, the anammox bacteria may be selectively retained on or near a surface of the polymer material to the exclusion or substantial exclusion of other bacteria. In some embodiments, the membrane is adapted to suppress the growth of undesirable bacteria, such as NOB.

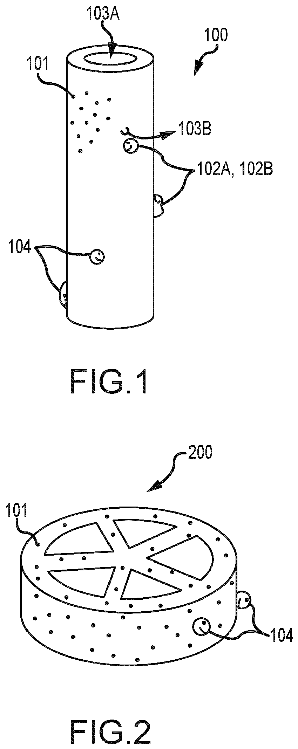

FIG. 1 is a schematic diagram of a hollow tube or carrier 100 for use in a treatment system, according to one or more embodiments of the present disclosure. As shown in FIG. 1, the hollow tube 100 may include a plurality of zeolites 101 on a surface of the material. For example, in some embodiments the plurality of zeolites 101 may cover at least a portion of the surface of the material. By way of another example, although not shown, the plurality of zeolites 101 may completely cover the material. The hollow tube 100 may further include Aerobic Ammonia-Oxidizing Bacteria (AOB) 102A and/or Aerobic Ammonia-Oxidizing Archaea (AOA) 102B colonized on the tube. Air 103A may be provided through the hollow tube and controllably delivered or expelled as air 103B out from the tube. The AOB 102A and/or AOA 102B may consume the expelled air 103B to generate nitrite for partial nitritation. In many embodiments, the AOB 102A and/or AOA 102B may be provided as part of one or more of a biofilm and slime layer, wherein the tube may include patches or localized areas of the biofilm/slime layer or the biofilm slime layer may completely cover the tube. The anammox bacteria 104 colonized on the tube may consume the nitrite from the AOB 102A and/or AOA 102B and ammonium sorbed to the zeolite to form N₂. The anammox bacteria 104 may similarly be provided as a biofilm layer in patches on the tube (e.g., covering at least a portion of the tube) or may completely cover the tube.

The systems may include a material that preferentially attracts and retains anammox bacteria in a localized area, which might also be combined with other methods of controlling air addition for partial nitritation, providing better, more complete, and faster anammox colonization and retention and therefore a faster and cheaper system for nitrogen removal from stormwater. The material may include a plastic-like material with a plurality of zeolites on a surface of the material designed to create an ideal environment for the proliferation and retention of anammox bacteria. FIG. 2, for example, is a schematic diagram of a hard polymer piece or carrier 200 with anammox bacteria 104 for enhancing anammox retention. The plastic material shown in FIG. 2 may be coupled with, for example, solution-phase nitrite generation, controlled through wetting and drying and redox potential. The environment may be created by achieving high concentrations ammonia on a surface of the material to favor selective colonization. In this way, the present disclosure provides systems and methods to enhance biological oxidation of ammonium in stormwater to harmless and unreactive nitrogen gas via partial nitritation and anammox processes for low-energy stormwater treatment to remove total nitrogen from stormwater streams.

It is noted that the carrier 200 is not limited to the embodiment illustrated in FIG. 2. Rather, the carrier 200 may be any shape with any cross-section, without departing from the scope of the present disclosure.

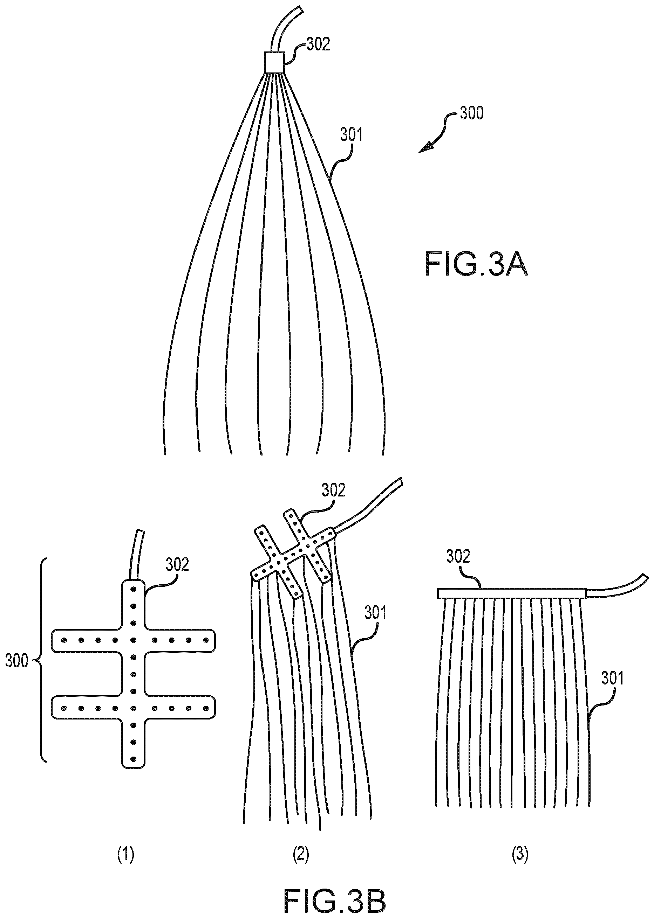

FIGS. 3A and 3B depict a carrier 300 including a plurality of elongated air-permeable hollow fiber membranes 301 spaced-apart and assembled into an array, each having a proximal end mounted to a header 302 and an unmounted distal end freely extending therefrom, and a plurality of zeolite particles (not shown) provided on the surface of each of the plurality of elongated air-permeable hollow fiber membranes 301, for use in stormwater treatment systems. The plurality of the elongated air-permeable hollow fiber membranes 301 can be adapted to controllably deliver air to bacteria that generate nitrite. The plurality of zeolite particles can be selected to preferentially adsorb ammonium from stormwater. The system attracts and retains anammox bacteria by concentrating, on the surface of the elongated air-permeable hollow fiber membranes, the ammonium and nitrite for use by the anammox bacteria. Any of the embodiments and features described above can be included herein.

It is noted that the header 302 and/or the hollow fiber membranes 301 are not limited to the embodiment illustrated in FIGS. 3A and 3B. Rather, the header 302 and/or the hollow fiber membranes 301 may be any shape with any cross-section, without departing from the scope of the present disclosure.

The system may be designed to deliver small quantities of air to the anammox bacteria 104 suitable for supporting partial nitritation and thereby, the anaerobic ammonia oxidation process. For example, the configuration and material properties may be designed to controllably deliver air to AOB 102A or AOA 102B. For example, the system may be provided in a variety of configurations, such as a "jellyfish" bundle packing with different spacing and quantities of hollow tubes (FIG. 3A) or a "rack" type packing (FIG. 3B), among others. The system may be designed with various material properties, such as thickness and gas permeability, among others. In an embodiment, the materials may be provided in a jellyfish or rack configuration, wherein strings of the material are provided in a bundle or rack that may be deployed in existing stormwater treatment reactors. The anammox bacteria 104 may grow on these strings and be held in the reactor. In addition, these strings of material may be constructed of hollow tubes with one end sealed or closed (e.g., a "dead end") and space in the hollow tubes may be filled with air. The properties of the material may be engineered to provide a highly controlled rate of air delivery, without requiring an operator to control the air addition externally. For example, in some embodiments, the system maintains about 1% or less dissolved oxygen, optionally without human intervention. In some embodiments, the air may be pulsed through the hollow fibers. In some embodiments, polymer chemistry may be altered and/or modified to control oxygen diffusion through the polymer material (e.g., in a hollow fiber configuration) to facilitate controlled nitrite production via attached AOB 102A or AOA 102B.

In some embodiments, the plurality of elongated air-permeable hollow fiber membranes 301 comprises a polymer selected from polysulfone, polyethylene, polyvinylidene fluoride, polyacrylonitrile, polyethersulfone, polyvinylalcohol, cellulose acetate, regenerated cellulose, polymethylmethacrylate, or a combination thereof. In some embodiments, the plurality of elongated air-permeable hollow fiber membranes 301 comprises an inorganic material selected from alumina, silica, titania, zirconia, ceramics, metal oxides, or a combination thereof.

In some embodiments, the plurality of zeolite particles comprises synthetic or natural zeolites selected from faujasite (FAU), clinoptilolite (HEU), zeolites with FAU framework, zeolites with HEU framework, cationic surfactant-functionalized zeolites, or a combination thereof.

In some embodiments, the plurality of zeolite particles is tethered to the surface of each of the plurality of elongated air-permeable hollow fiber membranes. In some embodiments, the plurality of zeolite particles includes zeolite particles modified with a functional group selected from amine, epoxy, and carboxyl groups. In some embodiments, the plurality of elongated air-permeable hollow fiber membranes comprises a polymer membrane having a surface modified with a functional group selected from amine, epoxy, and carboxyl groups.

In some embodiments, the plurality of zeolite particles is embedded on the surface of the elongated air-permeable hollow fiber membranes. In some embodiments, the plurality of elongated air-permeable hollow fiber membranes includes a plasma-etched surface that exposes the embedded zeolite particles.

In some embodiments, the plurality of zeolite particles is entrapped on the surface of the elongated air-permeable hollow fiber membranes by a polymer. In some embodiments, the polymer is a polyamide that has been treated with an aqueous sodium hypochlorite solution to expose the entrapped zeolite particles.

In some embodiments, the plurality of zeolite particles is grown on the surface of the elongated air-permeable hollow fiber membranes.

In some embodiments, the plurality of elongated air-permeable hollow fiber membranes has a sealed distal end for storing air. In some embodiments, the system maintains about 1% or less dissolved oxygen, optionally without human intervention. In some embodiments, the plurality of elongated air-permeable hollow fiber membranes is further adapted to suppress the growth of nitrite-oxidizing bacteria.

In some embodiments, the plurality of elongated air-permeable hollow fiber membranes is assembled into a non-circular array. In some embodiments, the plurality of elongated air-permeable hollow fiber membranes is assembled into the array in the absence of any supportive core. In some embodiments, the header is configured to provide a jellyfish configuration. In some embodiments, the header is configured to provide a rack configuration.

Embodiments of the present disclosure describe stormwater treatment systems comprising a plurality of hard polymer pieces capable of being suspended in a mixed-liquid system or packed in a flow-through system, and a plurality of zeolite particles provided on the surface of each of the plurality of hard polymer pieces. The hard polymer pieces and zeolite particles can be selected from any of the polymer materials and zeolite particles of the present disclosure. In preferred embodiments, the plurality of hard polymer pieces is adapted to promote biofilm growth and retention of one or more of anammox bacteria, AOB, and AOA; and the plurality of zeolite particles is selected to preferentially adsorb ammonium from stormwater. In some embodiments anammox bacteria or a combination of anammox bacteria, AOB, AOA, and denitrifying bacteria can be pre-grown on the surface of the hard polymer pieces prior to deployment in a treatment system. The system attracts and retains anammox bacteria by concentrating, on the surface of the hard polymer pieces, the ammonium for use by the anammox bacteria. Air can be provided from any source to the mixed-liquid system to generate nitrite.

The systems described herein may be modular and easily scalable. In addition, the systems described herein provide an optimal ecosystem for the anammox bacteria that is easy to maintain and requires minimal operational effort (e.g., by implementing the optimal oxygen flux into the system, through wetting and drying, through timed/controlled pulses of air into the system, or other methods of redox control). Accordingly, the systems described herein enable scalable, modular ammonia removal (e.g., which may be low-energy) to generate effluent that protects water quality and may be used for other applications such as sustainable irrigation and potable reuse after additional downstream treatment, among other applications.

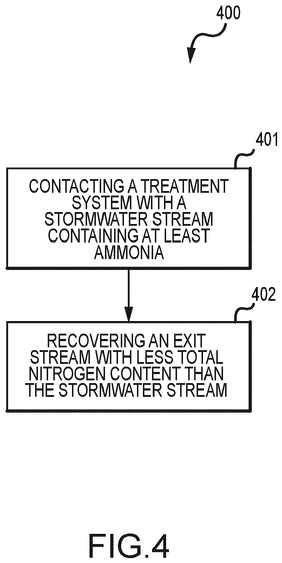

FIG. 4 is a flowchart of a method of treating stormwater, according to one or more embodiments of the present disclosure. The method 400 includes one or more of the following actions or embodiments. Any embodiment related to the anammox carriers as described throughout the present disclosure may be applicable to the following actions or embodiments.

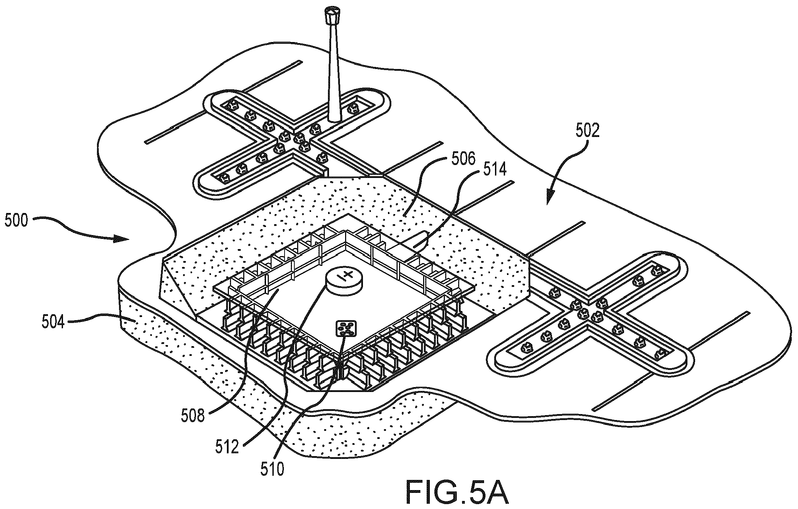

In some embodiments, the method 400 may include, but is not limited to, contacting 401 a treatment system or carrier with an influent stormwater stream. For example, the treatment system or carrier may be installed within a stormwater treatment system 500, 600, 700, 800 and may include a carrier 100, 200, 300, 510, 1002 (within 1000), 1408, as described in detail throughout the present disclosure, with example embodiments depicted in FIGS. 5A-5B, FIGS. 6A-6B, FIGS. 7A-7D, FIGS. 8A-8B, FIGS. 10A-10B, FIG. 14, respectively. In some embodiments, the method 400 may include, but is not limited to, recovering 402 an exit stream with less total nitrogen content than the influent stormwater stream. For example, the carrier can include a zeolite attached to and/or embedded in a surface of a polymer material and be configured to attract and retain anammox bacteria for oxidation of ammonium to dinitrogen gas.

The method 400 provides a process for treating stormwater using a system that facilitates the colonization and retention of slow-growing anammox bacteria. In particular, the treatment system may attract and sustain anammox bacteria by selectively adsorbing ammonia for degradation by the anammox bacteria, controlling redox potential via wetting and drying and/or mulch placement for nitrite production (partial nitritation) by AOB and/or AOA in support of the anammox process. In addition, the treatment system may attract and sustain anammox bacteria by controlling the delivery of air for nitrite production by AOB and/or AOA in support of the anammox process.

The contacting action 401 includes contacting a treatment system or carrier with an influent stormwater stream containing at least ammonia. The influent stormwater stream may have a variable flow rate. In this action, the stormwater stream is brought into physical contact with, or into immediate or close proximity to, the treatment system, where ammonium and/or ammonia may be degraded to N₂ gas and released from the stormwater stream. The stormwater stream may include one or more organic compounds, one or more nitrogen-containing compounds (e.g., nitrate, nitrite, ammonia, ammonium, etc.), and/or any other elements, compounds, and materials typically present in stormwater. The treatment system may include any of the carriers (e.g., 100, 200, 300, 510, 1002 (within 1000), 1408) of the present disclosure.

During the contacting, the ammonium in the water may selectively adsorb to the treatment system (e.g., onto a surface of the treatment system). The adsorbed ammonium may supply a food source for the anammox bacteria and accordingly may preferentially attract the anammox bacteria to the exclusion or substantial exclusion of other bacteria, etc. The anammox bacteria or a mixed culture containing anammox bacteria may also be pre-seeded onto surfaces for deployment into the treatment system. The anammox bacteria may degrade the ammonium to dinitrogen gas via the simultaneous utilization of nitrite, reducing a total nitrogen content of the stormwater stream. The ammonium may continue to be adsorbed onto open sites on a surface of the system as the anammox bacteria degrade the adsorbed ammonium. The treatment system may further controllably deliver air for partial nitritation and production of nitrite in support of the anammox process. Controllably delivering air for the anammox process may, either in addition or in the alternative, facilitate or enhance the selectivity of the treatment system for the anammox bacteria. The contacting may proceed without replacement, regeneration, and/or regrowth of the treatment system and/or components thereof.

In some embodiments, the method 400 may include, but is not limited to, attracting and retaining anammox bacteria by concentrating ammonium on the surface of a zeolite carrier for use by the anammox bacteria, and/or maintaining anammox bacteria growth after pre-seeding with a mixed culture containing anammox bacteria. Any of these can also be used to maintain anammox bacteria when the zeolite carrier is not in contact with the stormwater having the variable flow rate. It is noted these actions may be related to, incorporated or integrated with, and/or separate from the performing or operation of contacting 401.

The recovering action 402 includes recovering an exit stream with less total nitrogen content than the influent stormwater stream. In this action, a treated stormwater stream with less total nitrogen content than the untreated stormwater stream may be recovered as an exit stream. The recovering of the exit stream may include feeding the exit stream to another process or operation, collecting the exit stream, and recycling the exit stream, among other things.

In some embodiments, the method 400 may include, but is not limited to, installing a treatment system or carrier within the stormwater treatment system, receiving stormwater by the stormwater treatment system, providing the stormwater to the treatment system or carrier installed within the stormwater treatment system, removing or replacing the treatment system or carrier within the stormwater treatment system, repositioning the treatment system or carrier within the stormwater treatment system, and/or removing the recovered exit stream to stormwater treatment structures or water sources downstream of the treatment system or carrier. It is noted the method 400 may include the installing, repositioning, and removing or replacing of one or multiple treatment systems or carriers.

Any methods described throughout the disclosure may include more or fewer actions or embodiments than those described. In addition, the actions or embodiments of any methods may be performed at any time (e.g., sequentially, concurrently, or simultaneously). Further, the actions or embodiments of any methods may be performed in any order, including in an order as presented in the disclosure and/or an order other than that presented in the disclosure.

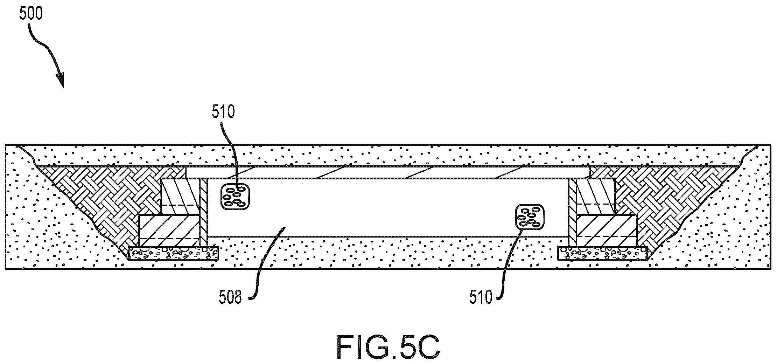

FIGS. 5A-5B are cut-away perspective views of example stormwater collection systems 500 in which the carriers (e.g., with or without zeolite) that are pre-seeded with anammox bacteria (or are not pre-seeded) may be deployed, in accordance with one or more embodiments of the present disclosure. FIG. 5C is a cross-section elevation view of the example stormwater collection systems 500, in accordance with one or more embodiments of the present disclosure.

As shown, the system 500 is provided within an above-grade structure 502 comprising a parking lot. The above-grade structure 502 is shown as a parking lot in Fig. 1 for illustrative purposes only. Surface and/or above-grade structures 502 may comprise various features and installations including, but not limited to, parking lots, driveways, sidewalks, unpaved and/or landscaped areas, gravel surfaces, etc. The above-grade structure 502 is provided on or above a substrate 504, which may comprise soil. A void 506 is formed in the substrate and a collection unit or module 508 (e.g., a storage vault, storage basin, storage container, or the like) is provided within the void. The void 506 and the collection unit comprise an internal storage volume and the ability to collect, store, and/or transport fluid including but not limited to stormwater. In preferred embodiments, a material or surface that forms the above-grade structure 502 comprises an at least partially-permeable material to permit flow of water and fluid to the collection module 508. It is noted the system 500 may include one collection module 508 or multiple collection modules 508A, 508B, ... up to 508N, where N is any number of collection modules 508.

The system 500 is also contemplated as comprising drainage devices to collect and convey fluid to the collection module 508. Such devices may include, for example, gutters, storm sewers, perforated piping, etc.

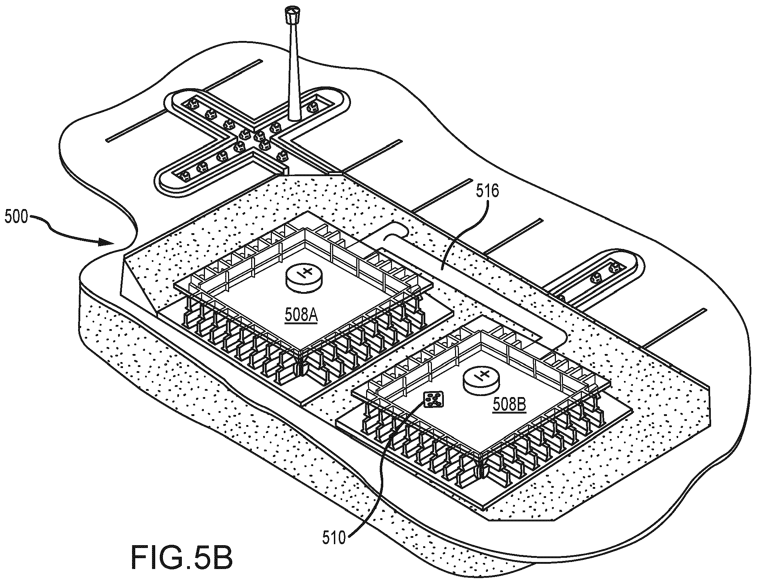

In some embodiments, a zeolite carrier 510 including anammox (e.g., a hollow tube or carrier 100, a hard polymer material or other carrier 200, a carrier 300, or other structure as described throughout the disclosure) is positionable within the storage system 500. For example, the carrier 510 may be positioned within the collection unit or module 508. By way of another example, the carrier 510 may be positioned within or coupled to an access port 512. By way of another example, the carrier 510 may be positioned within an exit conduit 514 leading from the collection unit or module 508 and into the surrounding substrate 504 and/or downstream treatment structures. By way of another example, the carrier 510 may be positioned within a connecting conduit 516 between collection units or modules 508A, 508B (i.e., as illustrated in FIG. 5B).

It is noted these examples and the shape and/or locations of the carriers 510 in FIGS. 5A-5C are only provided for purposes of illustration, and should not be considered limiting for purposes of the present disclosure. In general, the location of the carriers 510 within the media of the system 500 depends on desired redox conditions. For example, the carriers 510 may be positioned so that all of the water flow has to contact the carriers as it flows past. The carriers 510 may be pre-seeded with a mixed culture containing anammox bacteria. The carriers 510 may be positioned such that they sit below the water level most of the time, remaining wet and at times, anaerobic.

The storage system 500 may include the necessary components and/or the zeolite carrier 510 may be re-positioned within the storage system 500 to promote anammox bacteria growth and maintenance through the control and monitoring of system parameters, concentration of ammonia, flow of stormwater, contact time between the anammox and the stormwater, dry periods, redox control, ambient temperature control, stormwater flow temperature control, stormwater storage temperature control, amount of denitrifying bacteria present in biofilms, amount of known anammox bacteria, water chemistry, and reduction of animal pests within the storage system 500. For example, anammox bacteria growth and maintenance may occur by maintaining the carriers in a typically wetted area, by ensuring that all of the captured stormwater has to flow through a layer of packed carriers, by pre-seeding the carriers with a mixed culture containing anammox bacteria, by placing a source of carbon (sediment, mulch, etc.) above or below the layer of carriers, and by adding grating to reduce animal pests in the storage system 500.

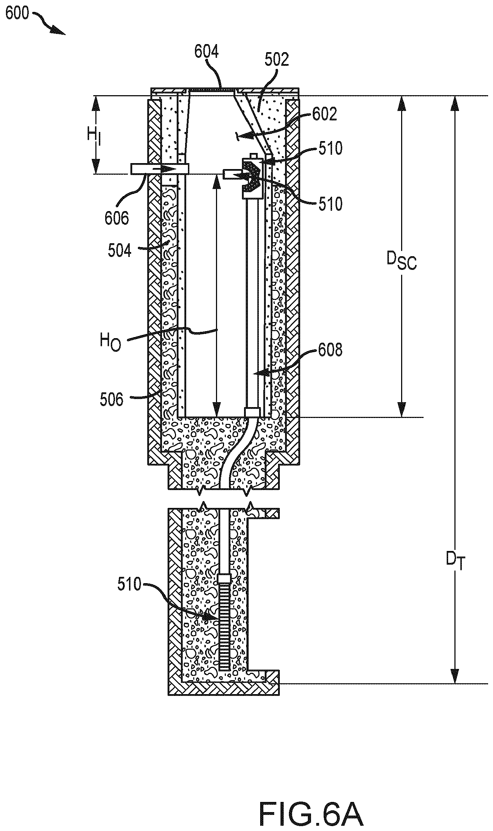

FIGS. 6A-6B depict example embodiments of a stormwater drainage system 600 in which anammox carriers may be deployed, in accordance with one or more embodiments of the present disclosure.

As shown in FIG. 6A, a collection unit or dispersion well 602 is positioned within the void 506 formed in the substrate 504. The void 506 and the dispersion well 602 comprise an internal storage volume having a settling chamber depth D_{SC} including an inlet pipe invert height H_{I} and overflow height H_{O}, and the ability to collect, store, and/or transport fluid such as stormwater. In some embodiments, stormwater is supplied to the dispersion well 602 via an inlet conduit 606. In some embodiments, a material or surface that forms the above-ground surface 502 and/or the well inlet 604 comprises an at least partially-permeable material to permit flow of water and fluid to the dispersion well 602. It is noted the system 600 may include one dispersion well 602 or multiple dispersion wells 602A, 602B, ... up to 602M, where M is any number of dispersion wells 602.

The drainage system 600 is also contemplated as comprising drainage devices to collect and convey fluid to the dispersion well 602. Such devices may include, for example, gutters, storm sewers, perforated piping, etc.

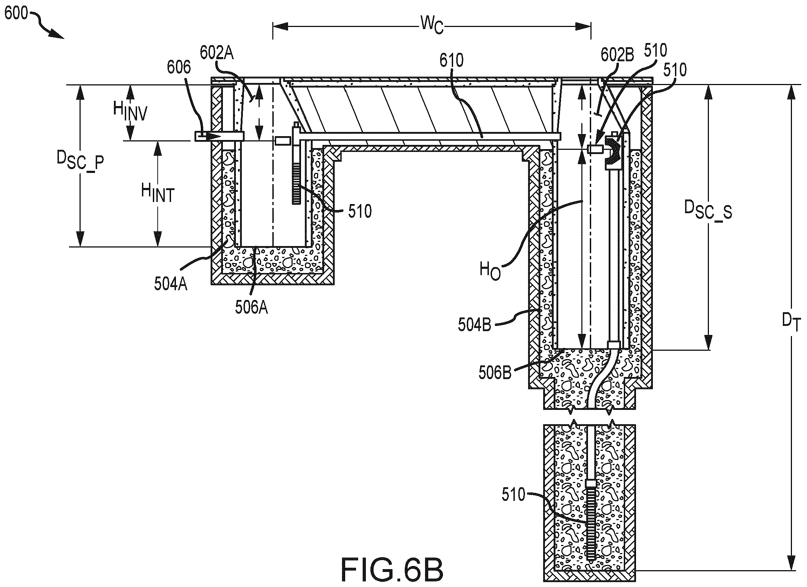

As shown in FIG. 6B, a first collection unit or dispersion well 602A and a second collection unit or dispersion well 602B are positioned within the void 506A and the void 506B formed in substrate 504A and substrate 504B, respectively, and are able to collect, store, and/or transport fluid such as stormwater. It is noted that the substrate 504A, 504B and/or the void 506A, 506B may be separate or a single body within the ground surface.

The void 506A and the dispersion well 602A comprise an internal storage volume having an inlet pipe invert H_{INV} and an intake inlet height H_{INT} that comprise an internal storage volume having a primary settling chamber depth D_{SC_P}. Separated by a width Wc, the void 506B and the dispersion well 602B comprise an internal storage volume having a secondary settling chamber depth D_{SC_S} including an overflow height H_{O}. Optionally, the secondary settling chamber depth D_{SC_S} may include the same or different intake inlet height H_{INT} as the dispersion well 602A. Further, in some embodiments the settling chamber depth D_{SC_S} is a portion of an estimated total depth D_{T} with penetration into permeable soils.

In some embodiments, stormwater is supplied to the dispersion well 602A via an inlet conduit 606. In some embodiments, a material or surface that forms the above-ground surface 502 and/or the well inlet 604 comprises an at least partially-permeable material to permit flow of water and fluid to the dispersion well 602A and/or the dispersion well 602B. It is noted the system 600 may include one dispersion well 602 or multiple dispersion wells 602A, 602B, ... up to 602M, where M is any number of dispersion wells 602.

The drainage system 600 is also contemplated as comprising drainage devices to collect and convey fluid to the dispersion well 602A and/or the dispersion well 602B. Such devices may include, for example, gutters, storm sewers, perforated piping, etc.

In some embodiments, a zeolite carrier 510 including anammox (e.g., a hollow tube or carrier 100, a hard polymer material or other carrier 200, a carrier 300, or other structure as described throughout the disclosure) is positionable within the drainage system 600. For example, the carrier 510 may be positioned within the dispersion well 602. By way of another example, the carrier 510 may be positioned within or coupled to the well inlet 604 and/or the inlet conduit 606. The carriers may be positioned so that all of the water flow has to contact the carriers as it flows past. The carriers may be pre-seeded with a mixed culture containing anammox bacteria. The carriers may be positioned such that they sit below the water level most of the time, remaining wet and at times, anaerobic. By way of another example, the carrier 510 may be positioned within an exit conduit 608 leading from the dispersion well 602 and into the surrounding substrate 504. By way of another example, the carrier 510 may be positioned within a connecting conduit 610 between dispersion wells 602A, 602B. It is noted these examples and the shape and/or locations of the carriers 510 in FIGS. 6A-6B, are only provided for purposes of illustration, and should not be considered limiting for purposes of the present disclosure. In general, the location of the carriers 510 within the system 600 depends on desired redox conditions. For example, the carriers 510 may be positioned so that all of the water flow has to contact the carriers as it flows past. The carriers 510 may be pre-seeded with a mixed culture containing anammox bacteria. The carriers 510 may be positioned such that they sit below the water level most of the time, remaining wet and at times, anaerobic.

The drainage system 600 may include the necessary components and/or the zeolite carrier 510 may be re-positioned within the drainage system 600 to promote anammox bacteria growth and maintenance through the control and monitoring of system parameters, concentration of ammonia, flow of stormwater, contact time between the anammox and the stormwater, dry periods, redox control, ambient temperature control, stormwater flow temperature control, stormwater storage temperature control, amount of denitrifying bacteria present in biofilms, amount of known anammox bacteria, water chemistry, and reduction of animal pests within the drainage system 600. For example, anammox bacteria growth and maintenance may occur by maintaining the carriers in a typically wetted area, by ensuring that all of the captured stormwater has to flow through a layer of packed carriers, by pre-seeding the carriers with a mixed culture containing anammox bacteria, by placing a source of carbon (sediment, mulch, etc.) above or below the layer of carriers, and by adding grating to reduce animal pests in the drainage system 600.

FIGS. 7A-7D depict example embodiments of a flow-through stormwater treatment system 700, according to one or more embodiments of the present disclosure. In one non-limiting example, the flow-through stormwater treatment system 700 may be a raingarden or a stormwater treatment pond. The zeolite-coated carriers described throughout the present disclosure may be deployed within the flow-through stormwater treatment system. The flow-through stormwater treatment system 700 includes one or more layers 702, as depicted in FIGS. 7A-7D.

As depicted in FIG. 7A, the layers 702 may be the same or similar in nature or composition. Alternatively, one or more of the layers 702 may be different in nature or composition. In one non-limiting example, the layers 702 include mulch and/or growth layer(s), zeolite-coated carrier layer(s), either alone or pre-seeded with a mixed culture containing anammox bacteria, StormMix^{™} media layer(s), and/or a combination of multiple of the above layers into a single layer. In FIG. 7A, depth H represents an anaerobic zone created by saturated conditions as a result of an elevated outlet pipe, where an underdrain pipe 704 is buried in a first layer 702 at a lower sub-elevation beneath a ground surface (e.g., below-grade) and the outlet pipe 706 fluidically coupled to the underdrain pipe 704 (or a section of the underdrain pipe 704) has an opening positioned at a second sub-elevation closer to the ground surface (or even above-grade). The depth H is variable and is used to achieve periods of wetting and drying such that desired periods of anaerobic and aerobic conditions occur in the system. In one example, the zeolite-coated carriers may be placed in a redox variable zone (e.g., at the top of the anaerobic zone where drying will create periodic aerobic conditions) and/or within the anaerobic zone, depending on desired conditions and to allow for periodic exposure to organic compounds (or total organic carbon, TOC) in the stormwater or coming from the mulch and/or growth layers.

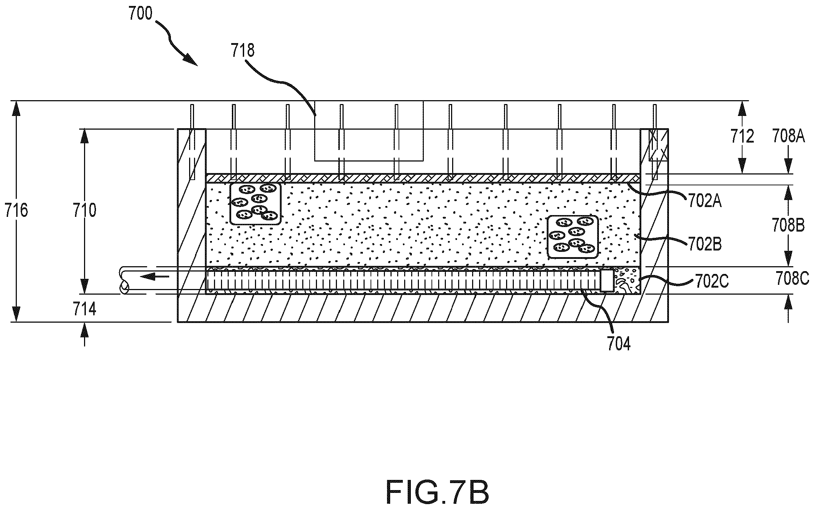

As depicted in FIGS. 7B-7D, the layers 702 may be the same or similar in nature or composition. Alternatively, one or more of the layers 702 may be different in nature or composition.

In one non-limiting example as illustrated in Fig. 7B, the layers include growth layer(s) such as vegetation (although not shown in FIGS. 7B-7D for clarity), mulch layer(s) 702A having a layer height 708A, StormMix^{™} media layer(s) 702B having a layer height 708B, drain rock 702C having a layer height 708C, and/or a combination of multiple of the above layers into a single layer. Zeolite-coated carrier(s) are positioned in one or more of the layers 702. The layer heights 708A, 708B, 708C may combine to form a media depth 710 which, in addition with an overhead height 712 and a material thickness 714 of the material forming the system 700, may result in a total system height 716. Although not shown in Fig. 7B, it is contemplated a top slab having a particular material thickness or height is included within the total system height 716.

In one instance, the system 700 includes a layer height 708A of approximately 2 inches, a layer height 708B of approximately 18 inches, a layer height 708C of approximately 6 inches, a media depth 710 of approximately 36 inches, an overhead height 712 of approximately 16 inches, a material thickness 714 of approximately 6 inches, and a total system height 716 of approximately 48 inches.

In one non-limiting example, the zeolite-coated carriers may be positioned within the StormMix^{™} media layer(s). In general, zeolite-coated carriers may be placed in a redox variable zone (e.g., at the top of the anaerobic zone) and/or within the anaerobic zone, depending on desired conditions and to allow for periodic TOC exposure. In some embodiments, an opening 718 (e.g., a curb inlet, a grating, a storm drain, or the like) is positioned within or proximate to a ground surface / uppermost layer of the flow-through stormwater treatment system. In one instance, the opening 718 has dimensions of approximately 24 inches by 7 inches.

In some embodiments, an underdrain pipe 704 with outlet pipe 706 (i.e., which may have a depth H of 0 or greater than 0) is installed within the flow-through stormwater treatment system including, but not limited to, within a layer of drain rock 702C. The combination of the opening at the ground surface and the underdrain pipe creates the flow-through nature of the stormwater treatment system, with the stormwater passing through the layers 702 with zeolite-coated carriers when flowing from the opening at the ground surface to the underdrain pipe. It is noted the various layers 702 may be housed within a structure fabricated from concrete or another material capable of retaining and separating the layers 702 from the surrounding substrate (e.g., soil).

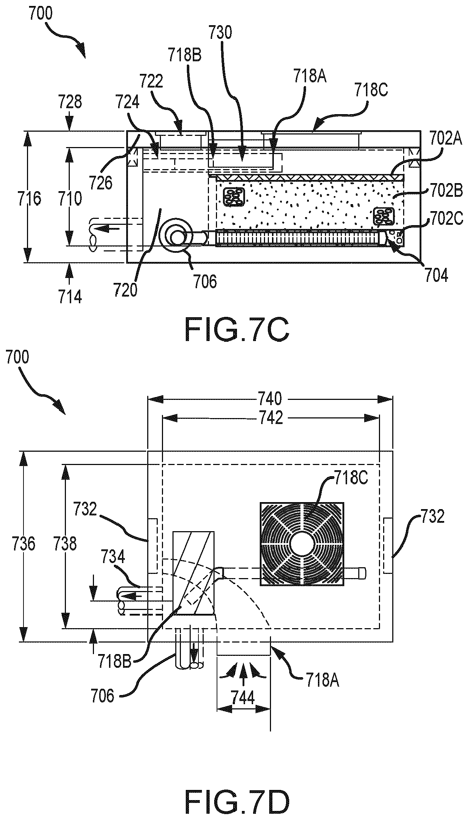

In another non-limiting example as illustrated in Fig. 7C, the system 700 optionally includes a biofiltration chamber 720 with an access hatch 722 and a bypass weir/outlet bay 724. At least a portion of the system 700 is covered by a top slab 726 having a height 728, in which the outlet bay 724 and openings 718A (e.g., a curb inlet), 718B (e.g., a chamber entrance), and/or 718C (e.g., a tree grate) are optionally positioned. Stormwater may enter via the openings 718A, 718B, 718C into the system 700 via one or more optional settling structures 730 including, but not limited to, an inlet contour rack with perforated floor. It should be understood that the exemplary dimensions provided for Fig. 7B are applicable to Fig. 7C, in addition to the height 728 being approximately 6 inches, the dimensions of opening 718A being 24 inches by 7 inches, the dimensions of opening 718B being approximately 18 inches by 36 inches, and dimensions of the opening 718C being approximately 36 inches by 36 inches.

In a further non-limiting example as illustrated in Fig. 7D, the system 700 optionally includes additional inlet locations 732 (i.e., in addition to or instead of the openings 718A, 718B, 718C and/or outlet pipes 734 (i.e., in addition to or instead of the outlet pipe 706). Exemplary dimensions of the system 700 additionally include a slab width 736 of approximately 84 inches and a system width 738 of 72 inches, and a slab length 740 of approximately 96 inches and a system length 742 of approximately 84 inches. Outlet pipes 706, 734 may be set from an exterior edge approximately 12 inches, and the opening 718A may be set from an exterior edge approximately 24 inches. The opening 718 may have a width 744 of approximately 24 inches.

It is noted that one or more of the various carriers as described throughout the present disclosure may require an intermittent, semi-constant, or constant fluid flow (e.g., stormwater flow, airflow, and the like). In this regard, any of the stormwater treatment systems in FIGS. 5A-5C, 6A-6B, and 7A-7D may include components or mechanisms to assist in fluid flow through the stormwater treatment system including, but not limited to, a baffle to impede stormwater flow rate into, out of, or within the stormwater treatment system, an air pump or other source of airflow, or the like without departing from the scope of the present disclosure.

The stormwater treatment system 700 may include the necessary components and/or the zeolite carrier 510 may be re-positioned within the stormwater treatment system 700 to promote anammox bacteria growth and maintenance through the control and monitoring of system parameters, concentration of ammonia, flow of stormwater, contact time between the anammox and the stormwater, dry periods, redox control, ambient temperature control, stormwater flow temperature control, stormwater storage temperature control, amount of denitrifying bacteria present in biofilms, amount of known anammox bacteria, water chemistry, and reduction of animal pests within the stormwater treatment system 700. For example, anammox bacteria growth and maintenance may occur by maintaining the carriers in a typically wetted area, by ensuring that all of the captured stormwater has to flow through a layer of packed carriers, by pre-seeding the carriers with a mixed culture containing anammox bacteria, by placing a source of carbon (sediment, mulch, etc.) above or below the layer of carriers, and by adding grating to reduce animal pests in the stormwater treatment system 700.

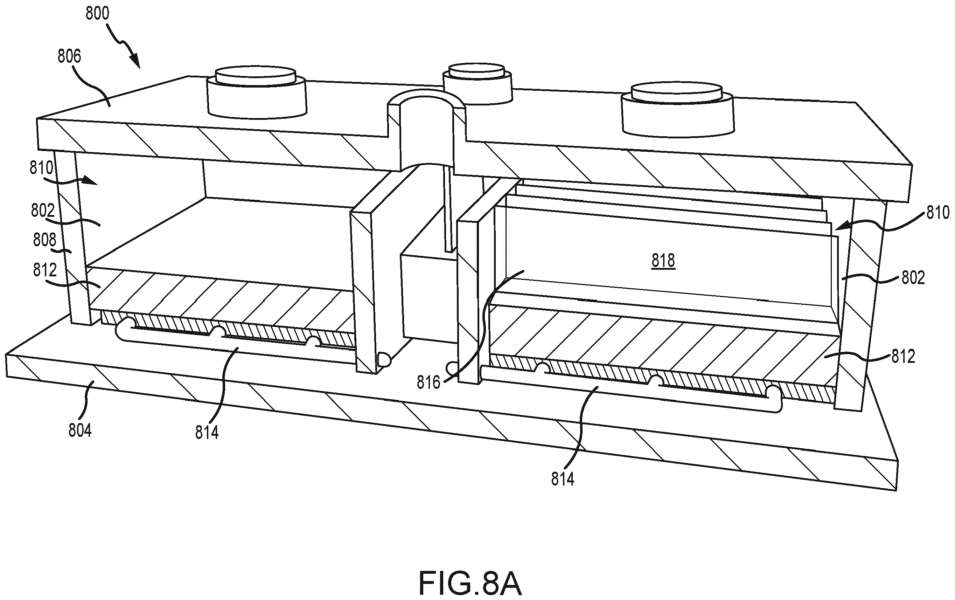

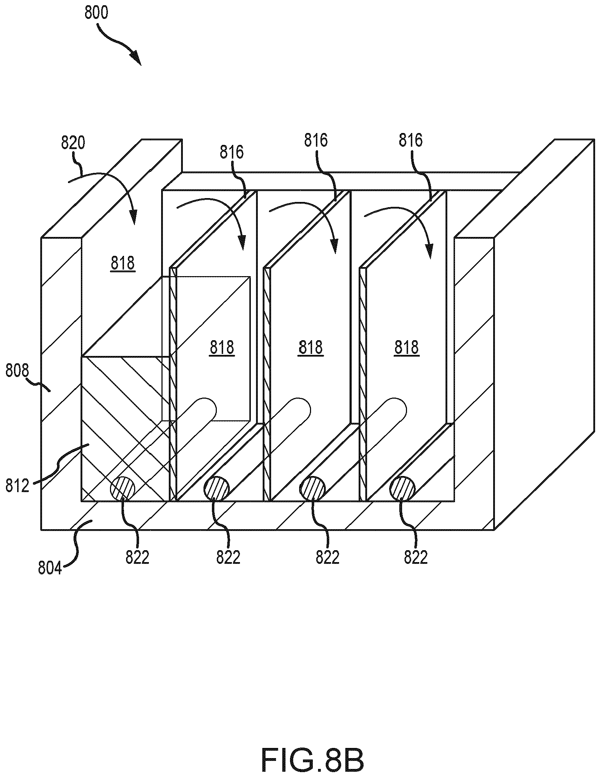

FIGS. 8A and 8B depict a system 800 including additional example stormwater treatment structures 802 capable of housing anammox carriers, according to one or more embodiments of the present disclosure. A structure 802 is formed from a base layer or floor 804, walls 806, and a top slab or lid 808 that define a cavity 810. The cavity 810 is filled with media 812 (i.e., that has one or more separate layers). Underneath (or within) the media 812 is an underdrain pipe 814.

The structure 802 includes partitions 816 (i.e., baffles or dividers) that separate the cavity 810 into four chambers 818. Optionally, the chambers 818 include a common inlet header and separate outlet structures leading to the underdrain pipe 814. The separate outlet structures are configured to allow for the control of saturation level within each chamber 818, such that retention time of the stormwater and the dominant redox conditions may be changed within the chambers 818 and sequential control of the redox conditions can be realized. Zeolite carriers 510 may be positioned within the structures 802. For example, one or more of the chambers 818 may include zeolite carriers 510. The zeolite carriers 510 may be positioned within the system 800 to allow for the control of saturation level.

It is noted that the system 800 is not limited to the number of structures 802, partitions 816, chambers 818, inlet header 820, and outlet structures 822 as illustrated in Figs. 8A and 8B, and any number from 1, 2, ... up to N number of each are contemplated without departing from the scope of the present disclosure.

The system 800 may include the necessary components and/or the zeolite carrier 510 may be re-positioned within the system 800 to promote anammox bacteria growth and maintenance through the control and monitoring of system parameters, concentration of ammonia, flow of stormwater, contact time between the anammox and the stormwater, dry periods, redox control, ambient temperature control, stormwater flow temperature control, stormwater storage temperature control, amount of denitrifying bacteria present in biofilms, amount of known anammox bacteria, water chemistry, and reduction of animal pests within the system 800. For example, anammox bacteria growth and maintenance may occur by maintaining the carriers in a typically wetted area, by ensuring that all of the captured stormwater has to flow through a layer of packed carriers, by pre-seeding the carriers with a mixed culture containing anammox bacteria, by placing a source of carbon (sediment, mulch, etc.) above or below the layer of carriers, and by adding grating to reduce animal pests in the system 800.

The following discussion is in reference to conducted field and lab tests that represent proof of concept data on (1) the rate at which zeolite-coated pucks sorb ammonium from a simulated stormwater matrix, (2) whether, in an actual stormwater retention/treatment system, anammox bacteria are retained and/or enriched on zeolite- coated carriers, and (3) whether, once sorbed, TN can be degraded in a simulated stormwater matrix providing that the appropriate redox cycling is possible. The tests are intended only to illustrate the above disclosure and should not be construed as to narrow its scope. One skilled in the art will readily recognize that there are many other ways in which the disclosure could be practiced. It should be understood that numerous variations and modifications may be made while remaining within the scope of the disclosure.

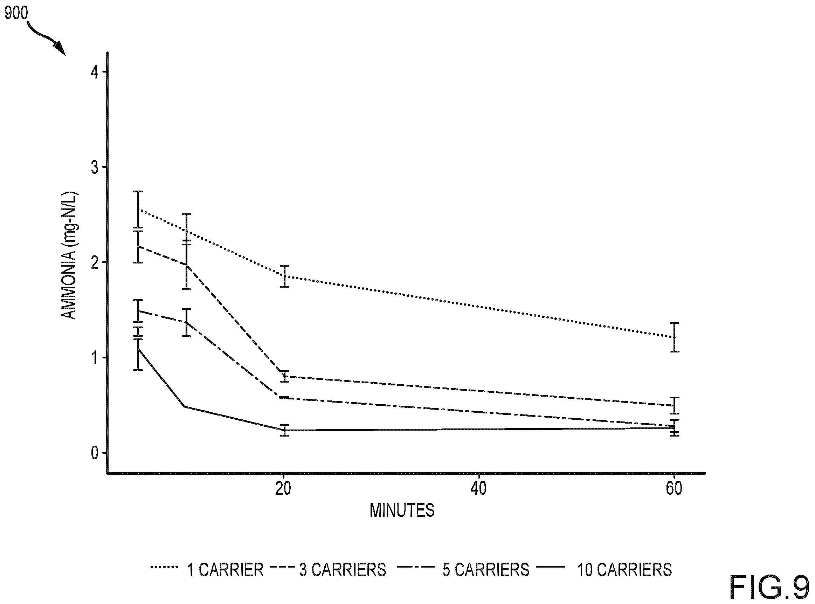

In one example test, the ammonium adsorption rate of zeolite-coated porous biofilm carriers at typical stormwater ammonium concentrations was determined. Different quantities of zeolite-coated carriers (1, 3, 5, or 10) were placed in 20 mL of 3 mg-N/L ammonium chloride solution and mixed on a rotator. Samples were taken after 5, 10, 20 and 60 minutes and ammonium was measured by an ammonium probe to determine the rate of ammonium removal by the zeolite-coated carriers. Each quantity of carrier was tested in triplicate. Ammonium concentrations during the 60-minute experiment with sorption to 1, 3, 5, and 10 carriers is shown in a graphical view (or graph) 900 in FIG. 9, which depicts rapid abiotic ammonium removal by 1, 3, 5, or 10 zeolite-coated carriers (error bars indicate the standard deviation of triplicate experiments). The reactors containing 10 carriers removed ammonium quickly, with 63.5 ± 9.1% of the ammonium removed after only 5 minutes. The ammonium removed appeared to reach or begin to reach equilibrium after approximately 20 minutes. This indicated that with the amendment of enough zeolite-coated carriers, ammonium could be rapidly removed from stormwater. All the experiments showed substantial removal of ammonium within 60 minutes, with 1 carrier removing 59 ± 6%, 3 carriers removing 83 ± 3%, 5 carriers removing 90 ± 3%, and 10 carriers removing 91 ± 3% of the ammonium added. Retention times in stormwater structures depend on the type of system, but systems such as outlet boxes and swales can be designed to have a minimum retention time of 9 minutes. Retention times in stormwater ponds or retention basins are typically around 12 hours.

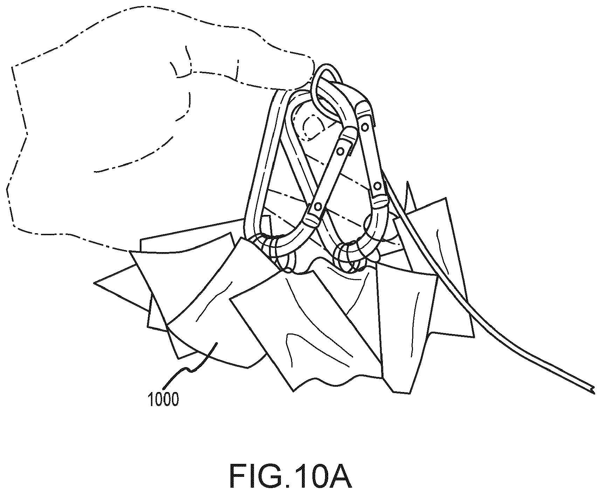

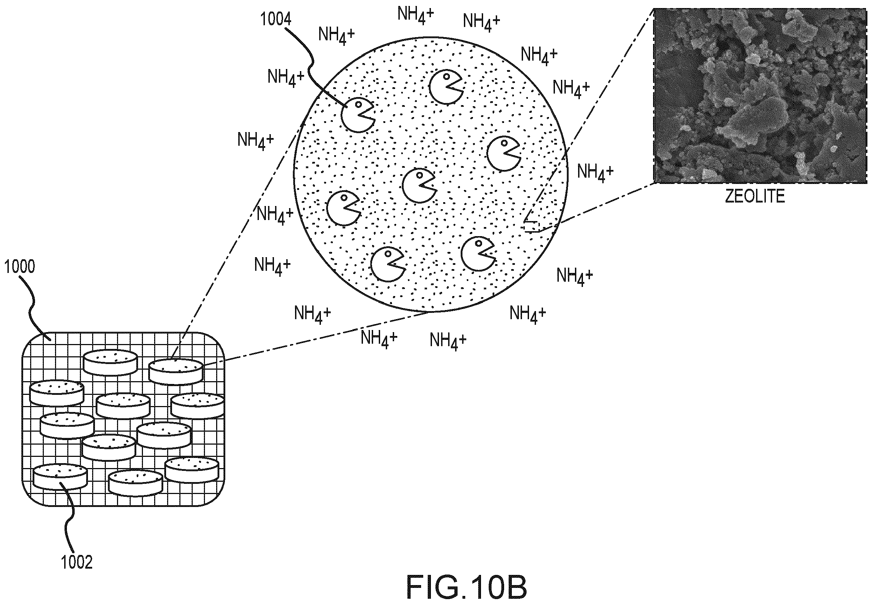

Carriers were also deployed in the field, in full-scale stormwater treatment systems. Carriers, including zeolite-coated pre-seeded carriers (ZP carriers), zeolite-coated unseeded carriers (Z carriers), control pre-seeded carriers (CP carriers), and control unseeded carriers (C carriers) were deployed in two full-scale stormwater treatment systems. Carriers were incubated for 2.5 months and sampled periodically to determine whether anammox bacteria, AOB, and denitrifiers were retained and/or grew in these systems. FIGS. 10A and 10B illustrate example deployable containers 1000 (e.g., mesh bags, housings, or the like) including zeolite-coated porous biofilm carriers 1002. Anammox bacteria 1004 is retained on or within individual carriers 1002 and increase the concentration of ammonium (NH₄⁺) locally within the containers 1000 and surrounding the carriers 1002. It is noted that carriers 1002 are interchangeable with any of the other carriers 100, 200, 300, 510 for the various embodiments described throughout the present disclosure.

Although FIG. 10B is understood to represent containers 1000 housing the carriers 1002, it is noted that the cartoon structures in FIG. 10B may also be understood as graphical representations of zeolite-coated carriers that may be suspended in place within a stormwater flow, so as to remove ammonium as the stormwater passes by the zeolite-coated carriers, without departing from the scope of the present disclosure. The first stormwater treatment system was a raingarden surrounded by residential land use; the carriers were buried 4 inches below the ground surface in the raingarden. The second stormwater treatment system was a treatment pond surrounded by mixed land use; the carriers were deployed in the outlet structure.

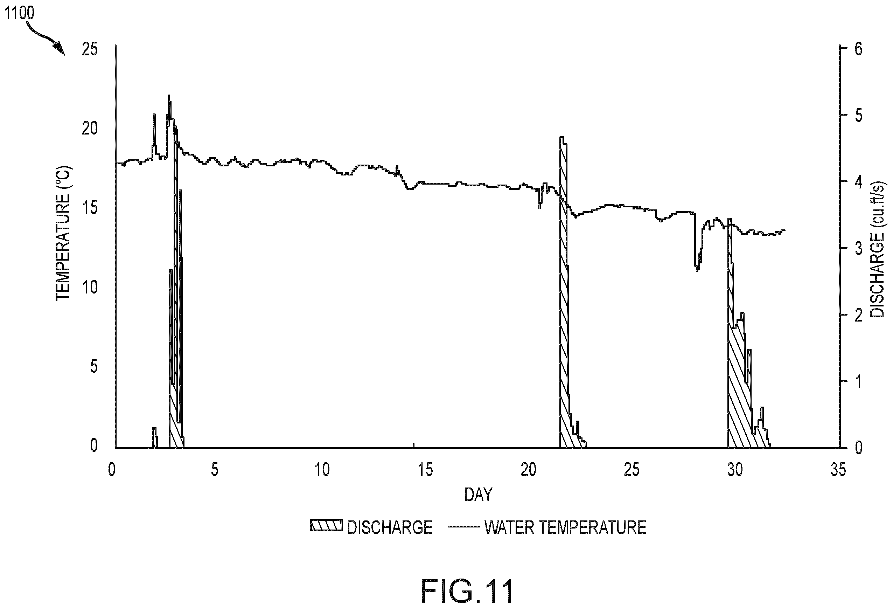

The average ammonium concentration for the pond, measured from storm events that occurred within the year prior to the experiment, was 0.112 mg/L, with a peak concentration of 0.36 mg/L measured in the outlet structure. The average TKN in the pond was 2.35 mg/L, with a maximum concentration of 3.5 mg/L. The deployment period was September 30 to mid-December in the Minneapolis, Minnesota area; the water temperature and discharge events in the stormwater treatment pond were recorded by a monitoring station from the date of carrier deployment until monitoring was stopped because of cold weather, as illustrated in a graphical view (or graph) 1100 in FIG. 11, depicting discharge and water temperature at the stormwater treatment pond. A monitoring station was not located at the raingarden; nevertheless, the temperature was presumed to be similar to that measured at the stormwater treatment pond, given the close proximity of the two systems. Each time samples were collected, one mesh bag of each carrier type (ZP, Z, CP, and C carriers) was collected at each site with the exception of the pre-seeded carriers that were collected every other collection time. Once collected, samples were immediately frozen.

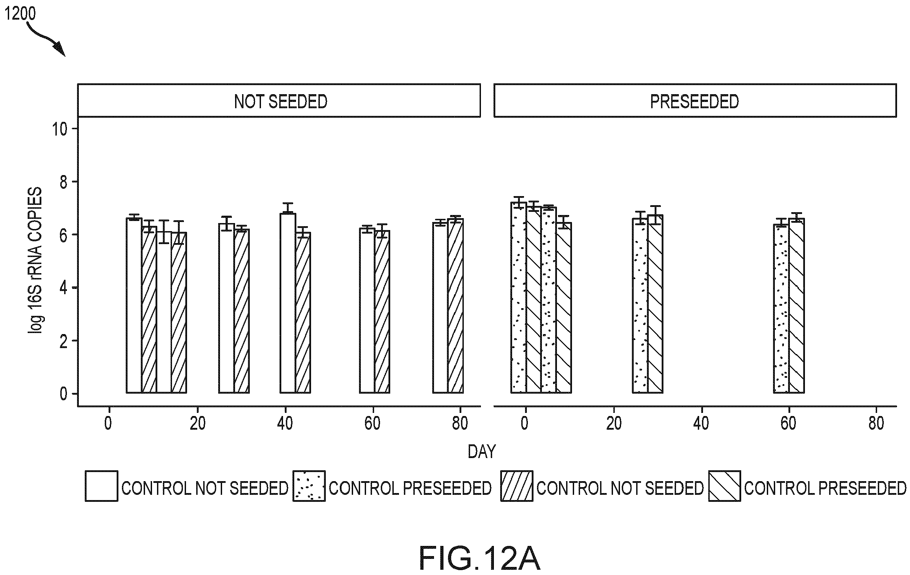

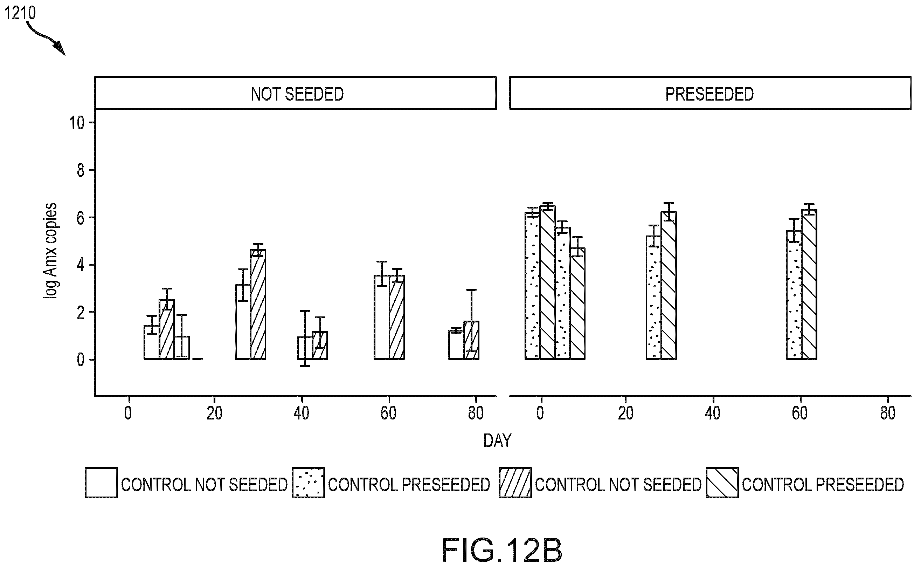

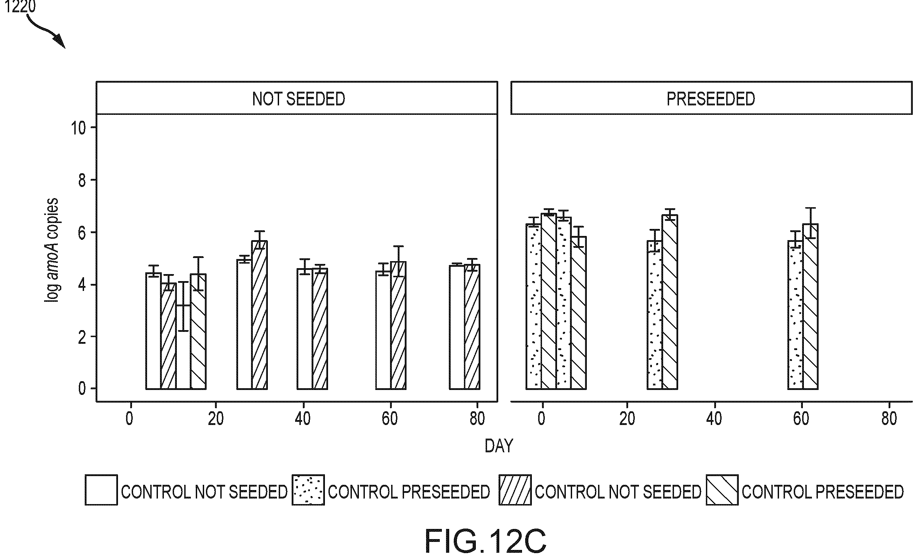

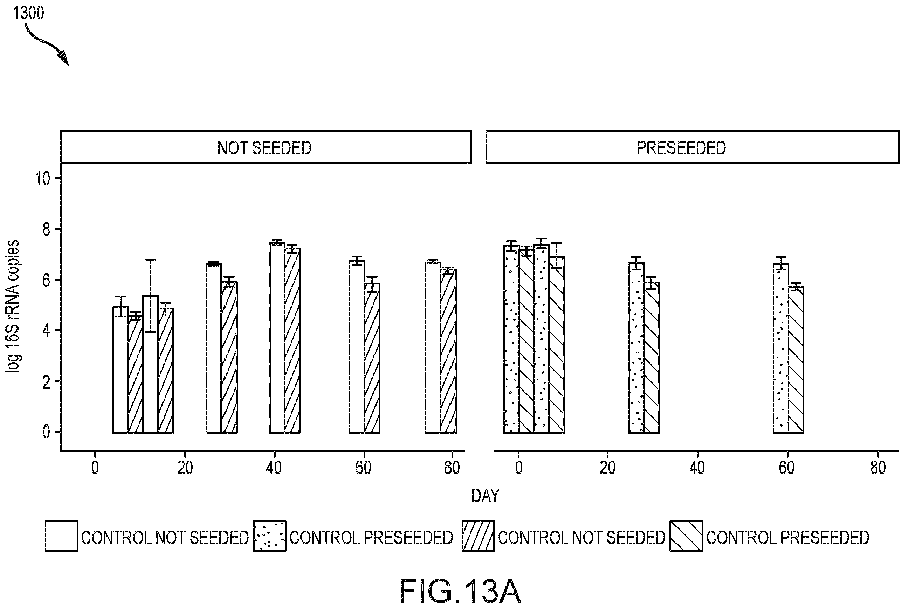

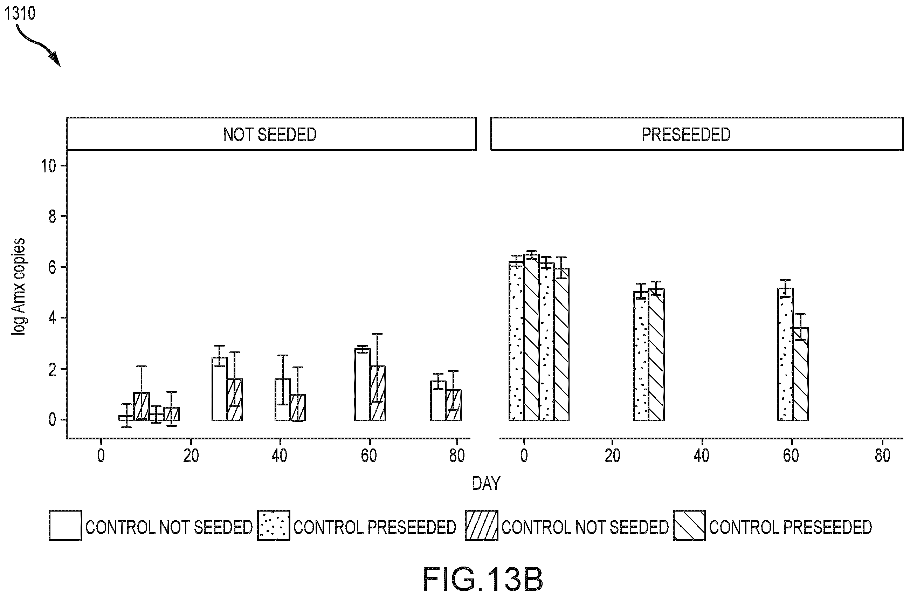

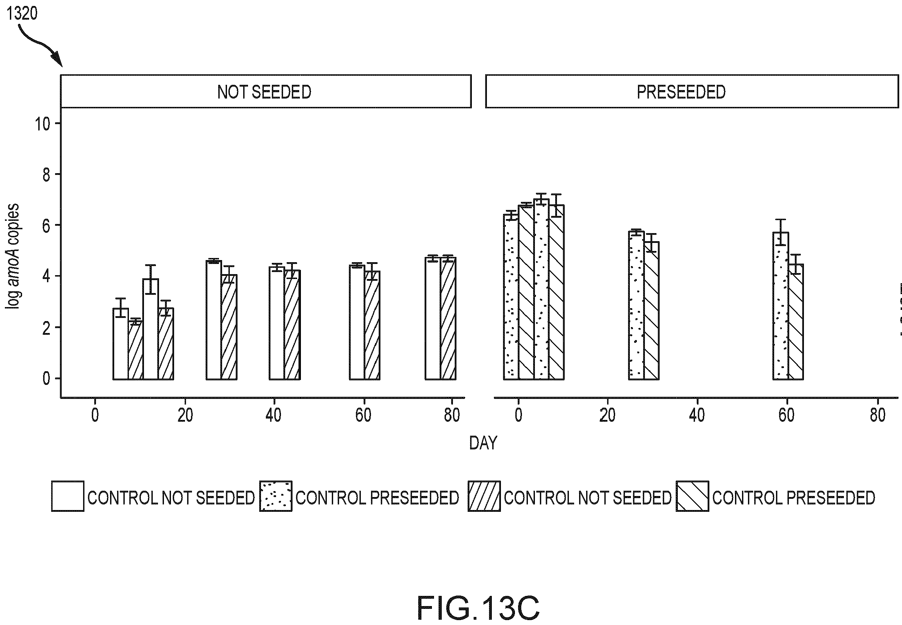

The average log 16S rRNA gene copy number (A), Anammox (Amx) 16S rRNA gene copy number (B), and *amoA* gene copy number (specific to AOB) (C) extracted from carriers deployed in the raingarden and in the stormwater treatment pond are shown in FIGS. 12 and 13, respectively.

FIGS. 12A-12C depict graphical views (or graphs) 1200, 1210, 1220, respectively, of gene copy numbers versus day for not seeded and preseeded control carrier samples deployed in a raingarden. In FIGS. 12A-12C, qPCR results from the control carrier samples retrieved from the raingarden, with (A) 16S rRNA (B) Amx, and (C) *amoA.* Error bars indicate standard deviation from five replicate samples. Pre-seeded samples on Day 0 indicate log copies present on the carriers immediately after seeding and before deployment in the field.

FIGS. 13A-13C depict graphical views (or graphs) 1300, 1310, 1320, respectively, of gene copy numbers versus day for not seeded and preseeded control carrier samples deployed in a stormwater treatment pond system. In FIGS. 13A-13C, qPCR results from the control carrier samples retrieved from the stormwater treatment pond, with (A) 16S rRNA (B) Amx, and (C) *amoA.* Error bars indicate standard deviation from five replicate samples. Pre-seeded samples on Day 0 indicate log copies present on the carriers immediately after seeding and before deployment in the field.

Pre-seeding carriers had the intended benefit of increasing the anammox biomass on the carriers deployed in both stormwater treatment systems compared to biofilms grown naturally. For carriers deployed in the raingarden, there were more Amx and *amoA* gene copies detected on pre-seeded carriers compared to unseeded carriers. The average log Amx copies/carrier on seeded carriers was 5.65±0.66 compared to 2.09±1.48 on the unseeded carriers (P<0.0001). The average log *amoA* copies/carrier was 6.18±0.51 on pre-seeded and 4.60±0.69 on unseeded carriers (P<0.0001). A similar pattern was observed for the carriers deployed in the stormwater treatment pond. Seeded carriers had more log Amx copies, at 5.22±0.88, and more log *amoA* copies/carrier, at 5.85±0.93, while unseeded carriers had 1.38:1:1.09 log Amx copies/carrier and 3.92±0.85 log *amoA* copies/carrier (P<0.0001 for both Amx and *amoA* genes). 16S rRNA copies followed a similar trend to that observed with the Amx and *amoA* genes, with more copies on the pre-seeded carriers in both systems (P<0.0001 for both). Because the results were averaged across time for each carrier type, this suggests that the pre-seeded carriers did retain the biofilm on the carriers for at least two and a half months, which is favorable for considering the use of such pre-seeded carriers (either zeolite-coated or not).

With respect to carrier type, Z and ZP carriers did not always retain more of the target organisms when compared to the C and CP carriers. Z and ZP carriers retained more Amx and *amoA* gene copies when deployed in the raingarden, suggesting that the zeolite coating provided an advantage with respect to the enrichment and retention of these organisms. ZP carriers had 5.84±0.81 log Amx copies/carrier and 6.32±0.54 log *amoA* copies/carrier, while CP carriers had 5.47±0.42 log Amx copies/carrier and 6.05±0.54 log *amoA* copies/carrier (P=0.024 and P=0.033, for Amx and *amoA,* respectively). The Z carriers deployed in the raingarden did have more *amoA* copies (4.74±0.63) than the C carriers (4.45 ±0.71) (P=0.01), but the number of Amx genes on both carriers was statistically equivalent (P=0.20). For the carriers deployed in the stormwater treatment pond, there was not a significant difference between the number of Amx or *amoA* copies/carrier between the ZP and CP carriers (P=0.76 and P=0.34, for Amx and *amoA,* respectively). With respect to the unseeded Z and C carriers, the number of log *amoA* copies on the C carriers (4.13±0.71) was statistically greater than that on the Z carriers (3.71±0.93) (P=0.041), whereas the number of Amx genes was statistically the same on both carriers (P=0.37). C carriers had a larger number of log 16S copies than the Z carriers in both systems (P=0.0067 for the raingarden and P=0.0092 for the stormwater treatment pond).

These findings indicate that pre-seeding carriers with an anammox-dominated enrichment prior to deployment will increase nitrogen cycling biomass, but that the carrier material may not be as important when pre-seeded. ZP carriers did retain more anammox bacteria and AOB in the raingarden, but not the stormwater treatment pond over this short (2.5 month) test period. In addition, the anammox bacteria and AOB retained on the CP carriers in the raingarden, although statistically less than those retained on the ZP carriers, were still high in number. Referring again to the graph 1100 in FIG. 11, the number of gene quantities on the pre-seeded carriers did not dramatically fluctuate over time, indicating that the carriers were able to roughly maintain the biomass that had grown during the pre-seeding period, even when discharge events occurred (e.g., around Days 3, 22, and 30, per the graph 1100 in FIG. 11) and temperatures were low. This is favorable for consideration of the use of anammox bacteria in stormwater treatment systems, with additional consideration necessary regarding breadth and variety of conditions to further identify when and where such carriers should be deployed for the most effective nitrogen removal and whether the ZP and CP carriers deviate more in their ability to retain anammox bacteria and AOB under different conditions.

It was expected that the Z carriers would encourage the colonization of more nitrogen cycling microbes compared to the C carriers, but this was not consistently seen. Amx and *amoA* genes were detected on both the Z and C carriers deployed at the stormwater treatment systems. This indicated that anammox bacteria and AOB were present in both locations and were able to readily colonize the carriers, again, even under cold conditions that were likely unfavorable for growth. The presence of *amoA* genes suggests that at least partial nitritation in these environments, notably in the anaerobic environment of the stormwater treatment pond, was possible. The biomass that colonized the unseeded carriers did appear to fluctuate over time, especially the numbers of Amx genes on the carriers in the raingarden. An unexpected observation was that the C carriers occasionally had increased numbers of total bacteria and AOB present on the carriers deployed in the pond.

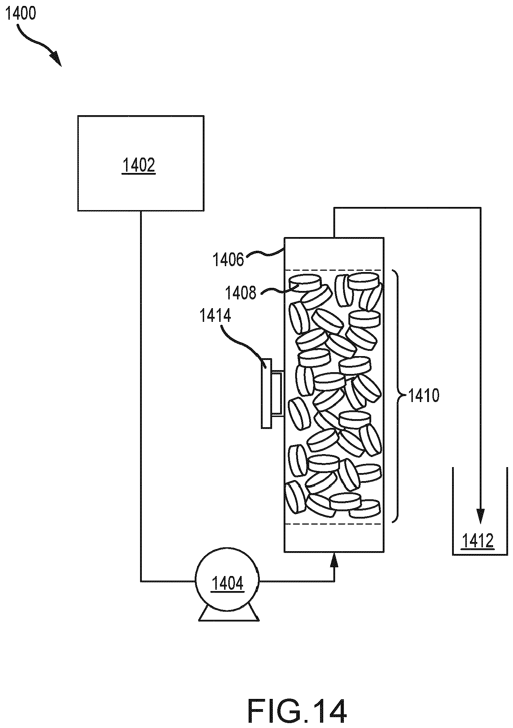

Laboratory-scale flow-through stormwater reactor experiments were also conducted to monitor ammonium removal and the retention and/or enrichment of anammox bacteria and AOB at varying flow rates, designed to simulate storm events. Reactors were packed with 80 ZP or CP carriers or 80 Z or C carriers pre-seeded (for two weeks) with water from the stormwater treatment pond described above. An example reactor configuration 1400 is shown in FIG. 14, where influent 1402 was pumped via a pump 1404 into a reactor 1406 including carriers 1408 within a high ammonium (NH₄⁺) zone 1410, and effluent 1412 was collected from the reactor 1406. Optionally, samples of the carriers 1408 could also be harvested through a side port 1414 of the reactor 1406 and analyzed. It is noted that carriers 1408 are interchangeable with any of the other carriers 100, 200, 300, 510, 1002 for the various embodiments described throughout the present disclosure.

Triplicate reactors were operated for each treatment (ZP, CP, Z, C) for experimental replication. Experiments were operated for 6 days, and hydraulic resonance times (HRTs) varied between batch operation with an HRT of up to 2 days to 10 minutes, to simulate a storm. The operation was as follows: 22 hours operated in batch mode, 47 hours operated with an HRT of 12 hours, 21 hours operated in batch mode, 6 hours operated with HRT of 30 minutes, 45 hours operated in batch mode, 3 hours operated in HRT of 10 minutes. The HRTs were selected to simulate rain events. The average influent ammonium concentration was 2.8±0.55 mg-N/L, amended into the model stormwater.

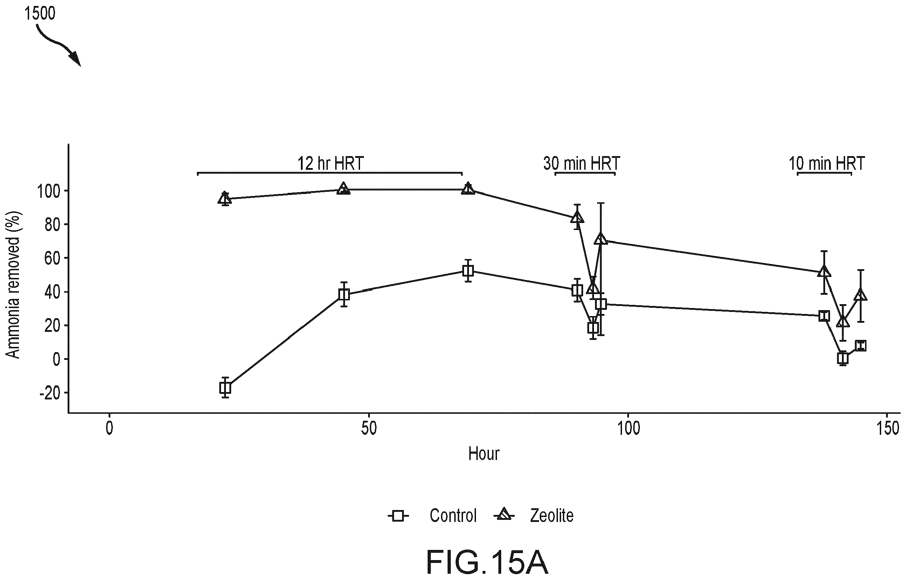

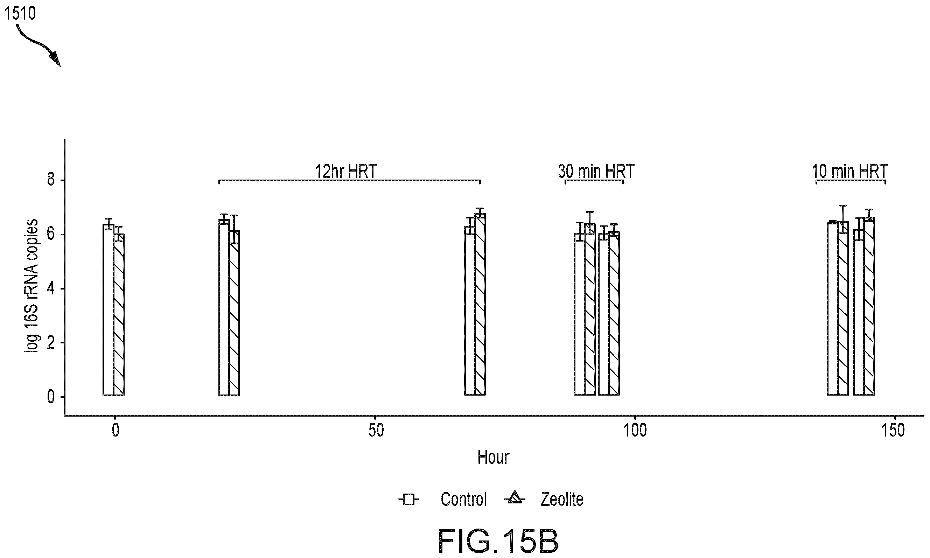

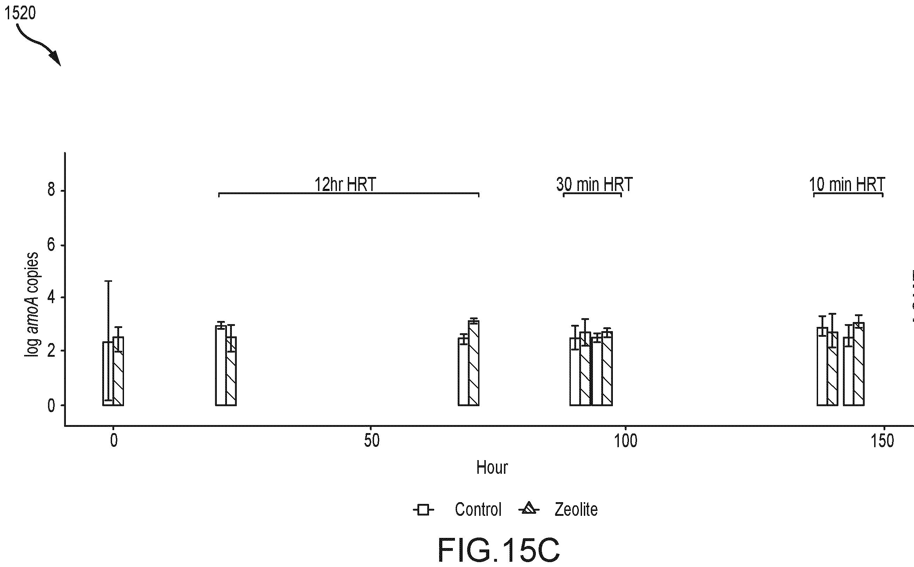

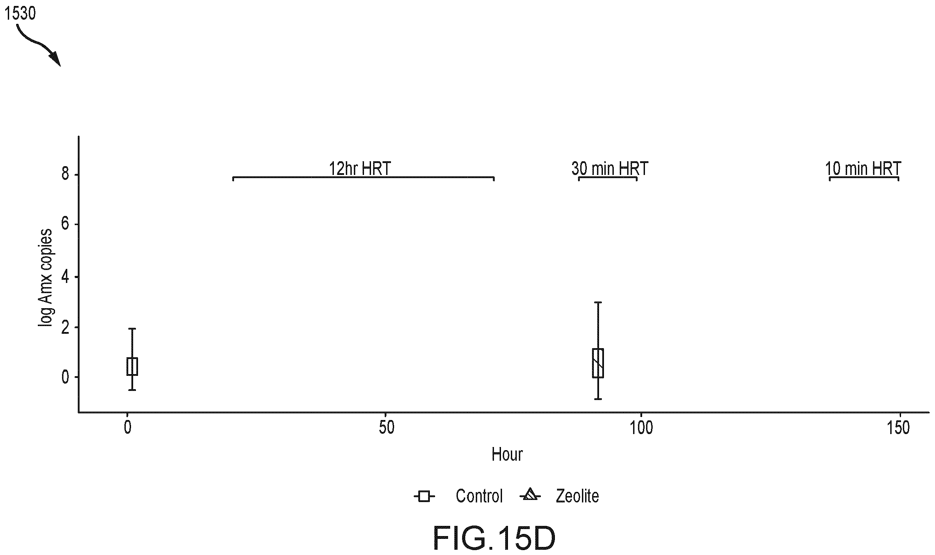

FIG. 15A-15D depict graphical views (or graphs) 1500, 1510, 1520, 1530, respectively, of gene copy numbers or water quality parameters versus time in water from a model stormwater treatment reactor containing control or zeolite-coated carriers pre-seeded with pond water for operational stages of varying hydraulic resonance times (HRT) (12 hours (hr), 30 minutes (min), 10 min). In FIGS. 15A-15D, the ammonium removal and qPCR results for lab scale carrier reactors pre-seeded via incubation in stormwater, including (A) Ammonium removal [(Cᵢ-Cₒ)/Cᵢ], (B) Log 16S rRNA copies per carrier, C) Log *amoA* copies per carrier, D) Log Amx copies per carrier. Error bars indicate the standard deviation from triplicate experimental replicates.

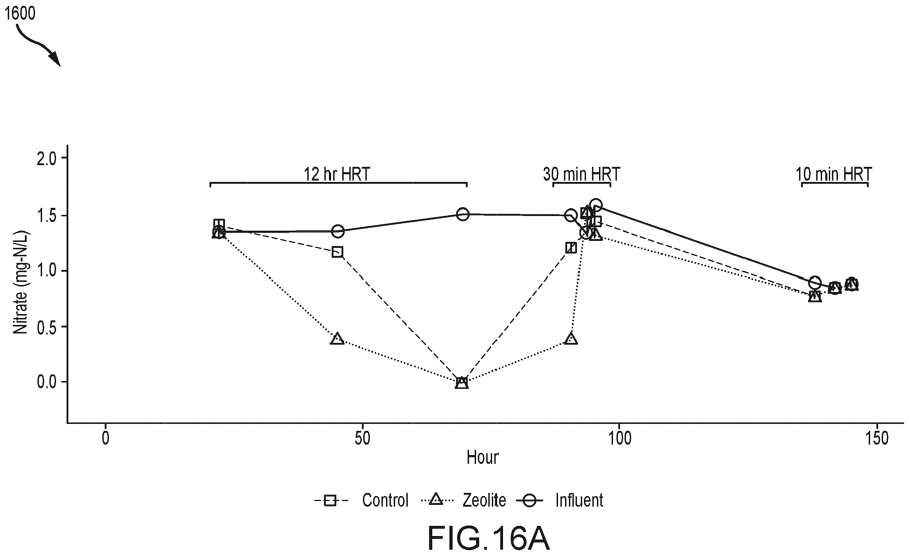

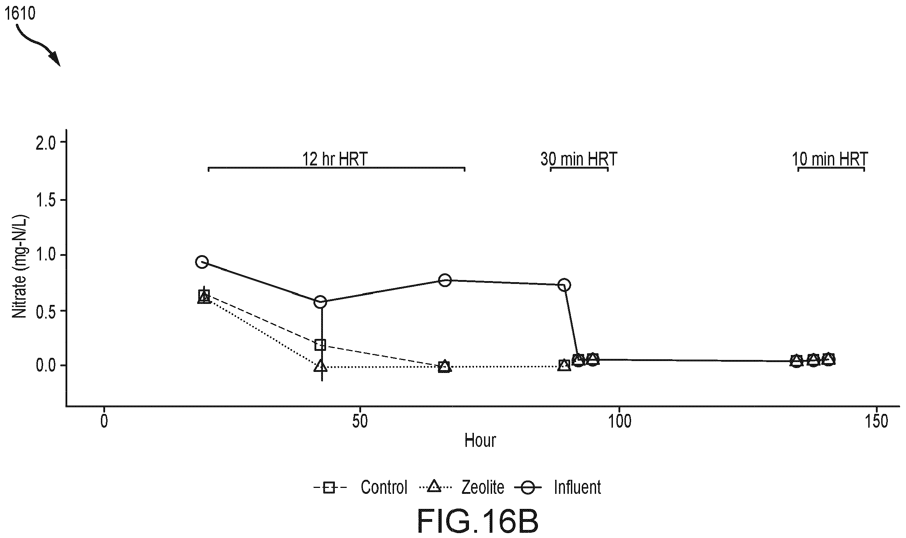

FIGS. 16A-16B depict graphical views (or graphs) 1600, 1610, respectively of nitrate concentrations versus time in water from a model stormwater treatment reactor for operational stages of varying HRT (12 hr, 30 min, 10 min), where the reactor contains control or zeolite-coated carriers pre-seeded with either (A) pond water or (B) an anammox enrichment culture. In FIGS. 16A-16B, the nitrate influent and effluent concentration in the laboratory-scale carrier reactors, with (A) Z and C carriers pre-seeded with pond water, and (B) ZP and CP carriers pre-seeded in anammox enrichment reactor. Error bars represent the standard deviation from triplicate experimental replicates.

As generally depicted in FIGS. 15A-16B, the reactors containing Z carriers removed more ammonium throughout all stages of the experiment compared to the reactors containing C carriers, with average ammonium effluent concentrations of 0.84 ± 0.81 mg-N/L versus 1.96 ± 0.82 mg-N/L in the reactors containing the Z versus C carriers, respectively (P<0.0001). The effluent ammonium concentrations during each of the operational stages of varying HRT (12 hr, 30 min, 10 min) are summarized in Table 1, below, which again showed lower effluent ammonium concentrations in all stages in the reactors containing Z carriers versus those containing C carriers (See Table 1 for statistics as well). Although ammonium removal decreased in both sets of reactors when the HRT decreased to 30 min and 10 min, removal rebounded after the simulated storm event. It is unclear whether this removal was primarily abiotic sorption or whether some biological removal of ammonium also occurred. No nitrite was detected in the influent or effluent to the reactors over time, suggesting that if ammonium oxidation occurred, any nitrite produced was either further oxidized to nitrate or reduced to nitrogen gas. As depicted in FIGS. 16A-16B, nitrate was detected in the reactor influent, at 1.31 ± 0.27 mg-N/L, decreasing in the effluent over the 12 hr HRT period and again after the 30 min HRT. This suggests that some denitrification was occurring in the reactors. Although it is difficult to determine whether anammox or ammonium oxidation was active on the carriers, based on previous observations of enhanced biological ammonium degradation under simulated mainstream wastewater conditions, it is likely that given time and the development of more robust biofilm on the carriers, the biological component of ammonium removal in actual or simulated stormwater treatment systems would increase.

With respect to the quantities of bacteria and nitrogen-cycling genes present on the carriers pre-seeded with pond water, the two different types of carriers, Z and C, performed similarly for most of the 6-day experiment, with no significant differences observed between the two carrier types for any of the genes. Only for the carrier samples taken after the 12 hr HRT period (at Experiment Hour 70) was there more *amoA* on the Z carriers than the C carriers (3.18±0.08 vs 2.49±0.16 log copy numbers) (P=0.0024). Despite the periodic increases in flow rate, the total number of bacteria (via 16S rRNA gene copy number) and AOB (via *amoA* gene copy number) were well retained on the carriers. Of note was the fact that anammox bacteria were detected only in the reactors containing Z carriers, suggesting that again, if given more time, greater numbers of anammox bacteria could have been enriched and retained on these carriers.

**Table 1: Ammonium effluent concentrations in mg-N/L and removal (%) from stormwater carrier reactors seeded with water from a stormwater treatment pond and with an anammox enrichment culture over operational periods with different HRTs. Average values ± the standard deviation from triplicate experimental replicates is shown.**

| | **Ammonium effluent (mg-N/L)** | | | **Ammonium Removal (%)** | |
|---|---|---|---|---|---|
| | Zeolite-coated carrier reactors | Control carrier reactors | P-values | Zeolite-coated carrier reactors | Control carrier reactors |

| | *Reactors pre-seeded with water from second storage treatment system* | | | | |
|---|---|---|---|---|---|
| 12 hr HRT | 0.054 ± 0.085 | 1.99 ± 1.09 | 0.004 | 98 ± 3 | 25 ± 32 |
| 30 min HRT | 0.74 ± 0.50 | 1.44 ± 0.37 | 0.013 | 61 ± 7 | 26 ± 20 |
| 10 min HRT | 1.73 ± 0.51 | 2.56 ± 0.50 | 0.016 | 38 ± 17 | 13 ± 11 |

| | *Reactors pre-seeded with anammox culture* | | | | |
|---|---|---|---|---|---|
| 12 hr HRT | 0.72 ± 1.05 | 0.98 ± 1.31 | 0.51 | 78 ± 32 | 70 ± 35 |
| 30 min HRT | 1.80 ± 0.44 | 2.11 ± 0.38 | 0.58 | 41 ± 15 | 31 ± 13 |
| 10 min HRT | 2.0 ± 0.45 | 2.14 ± 0.45 | 0.63 | 26 ± 17 | 21 ± 17 |

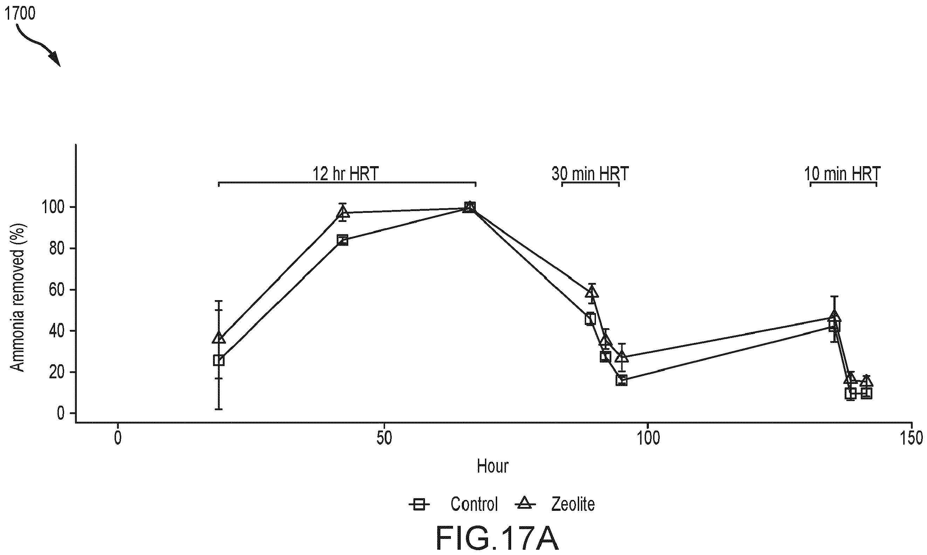

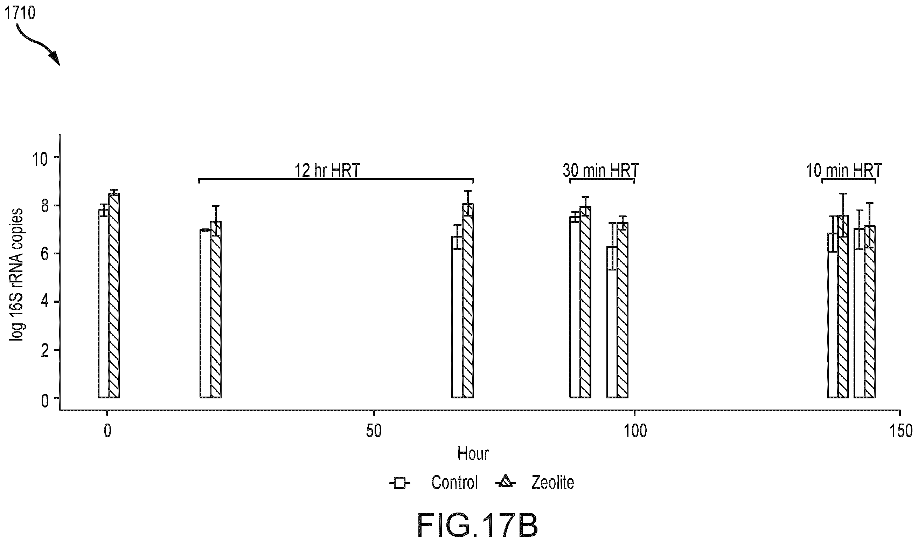

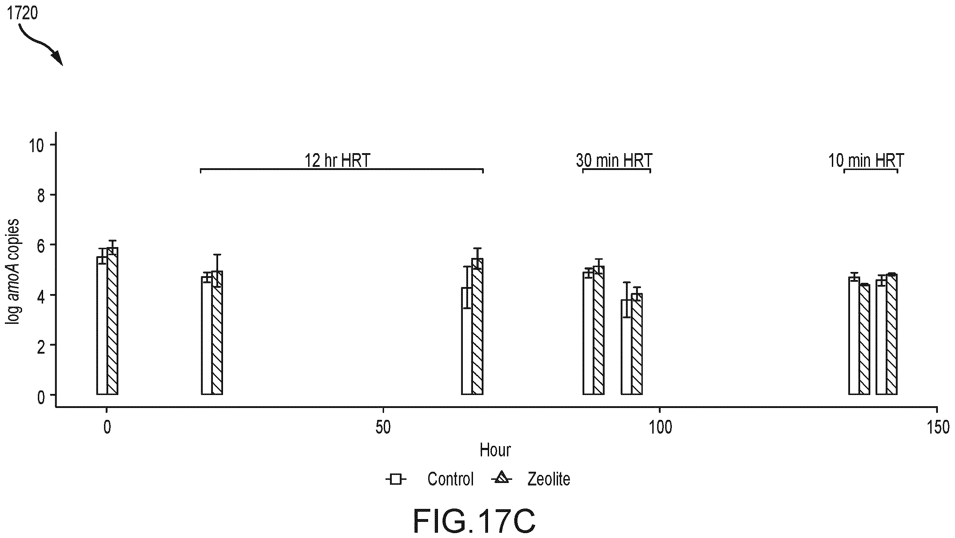

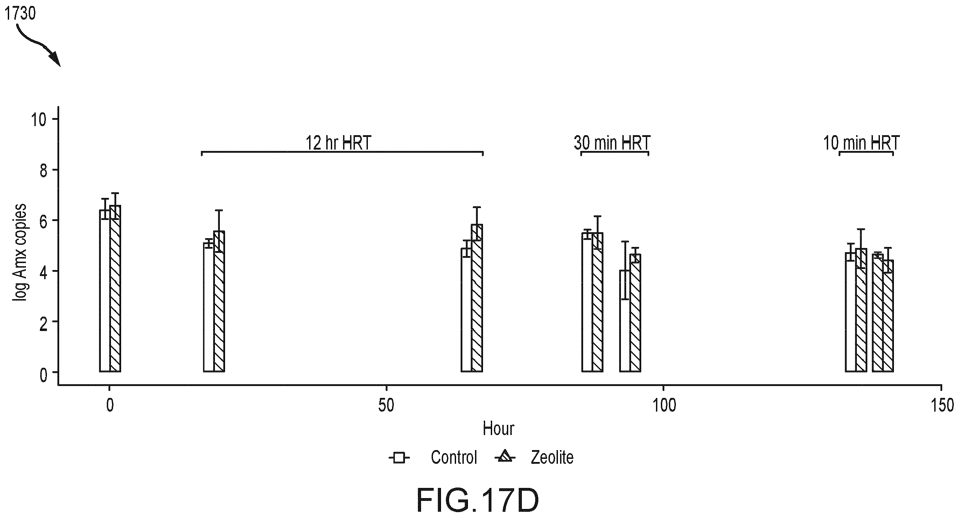

FIGS. 17A-17D depict graphical views (or graphs) 1700, 1710, 1720, 1730, respectively, of gene copy numbers or water quality parameters versus time in water from a model stormwater treatment reactor containing control or zeolite-coated carriers pre-seeded with an anammox enrichment culture for operational stages of varying HRT (12 hr, 30 min, 10 min). In FIGS. 17A-17D, the ammonium removal and qPCR results for the laboratory-scale reactors containing carriers pre-seeded with a mixed culture containing anammox bacteria, including (A) Ammonium removal [(Cᵢ-Cₒ)/Cᵢ], (B) Log 16S rRNA copies per carrier, (C) Log *amoA* copies per carrier, and (D) Log Amx copies per carrier. Error bars indicate the standard deviation of triplicate experimental replicates.

Reactors containing ZP and CP carriers performed differently than those containing Z and C carriers seeded with water from a stormwater treatment pond, in that the zeolite-coated and control carriers removed similar quantities of ammonium, with statistically similar effluent concentrations (P=0.14). Similarly, the effluent ammonium concentrations during each of the operational stages (HRT of 12 hr, 30 min, or 10 min) were not significantly different between the reactors containing the two different types of carriers (Table 1). This suggests that when pre-seeded, the carrier type did not significantly influence ammonium removal at these short HRTs and over a relatively short experimental period of 6 days. This differs from what one might expect based on previous research that showed that zeolite was still capable of exchanging ammonium when covered by biofilm. Nevertheless, those results were obtained under equilibrium conditions and not under conditions that were dominated by sorption kinetics, as were the experiments presented here. As with the Z and C carrier-containing reactors, no nitrite was detected in the influent or the effluent; nitrate, however, was detected in the influent to the reactors at 0.47±0.40 mg-N/L. Nitrate concentrations decreased to approximately zero in the effluent of both the ZP and CP carrier reactors, again indicating that some denitrification was occurring in the reactors.

With respect to the quantities of bacteria and nitrogen-cycling genes present, the two different types of carriers, ZP and CP, performed relatively similarly for the 6-day experiment, with the log number of 16S gene copies higher on the ZP carriers than on the CP carriers (P=0.003), but Amx and *amoA* copies statistically the same between the two (P=0.44 and P=0.23). As with the experiment containing the Z and C carriers pre-seeded with pond water, the total number of bacteria, anammox bacteria, and AOB were all well-retained on the carriers over the course of the 6-day experiment, with only a slight drop in the *amoA* and 16S rRNA copy numbers after the 30-minute HRT operating period.

In summary, zeolite-coated carriers were able to remove ammonium from simulated stormwater rapidly, and at time frames relevant for sizable storm events; this indicates that if paired with the bio-regeneration of the zeolite via ammonium oxidizing microbes, either AOB or anammox, but ideally anammox for complete nitrogen removal, these novel carriers could offer a method of mitigating nitrogen pollution from stormwater or stormwater treatment systems that might otherwise export excess nitrogen. Pre-seeded carriers were able to retain their biofilm during an 11-week field deployment in a raingarden and a stormwater treatment pond over a period of low temperatures. It is noted the zeolite coating did not always help to enrich or retain anammox bacteria and/or AOB, possibly because of the time of year during which they were deployed (late fall/early winter in Minnesota, USA). In addition, laboratory-scale experiments demonstrated that the zeolite-coated carriers were better able to remove ammonium from the influent during a simulated storm event when not pre-seeded with an anammox biofilm (Table 1). Pre-seeded carriers, regardless of whether they were control or zeolite-coated, did contain a greater quantity of nitrogen-cycling bacteria in the carrier biofilm than unseeded carriers. These results indicate that anammox-pre-seeded carriers (non-zeolite-coated or zeolite-coated) that are seeded with a mixed culture enriched in anammox bacteria, zeolite-coated unseeded carriers, and combinations thereof may be ideal for deployment in a stormwater treatment system, achieving both rapid abiotic ammonium removal and enhanced biological nitrogen degradation.

Advantages of the present disclosure are directed to a systems and method for treating stormwater with anammox bacteria. The anammox bacteria can be naturally enriched from the environment on a carrier including zeolite structures; the anammox bacteria can also be supplied through pre-seeding the carrier (either zeolite-containing or not), with a mixed culture enriched with anammox. The zeolite is suitable for sorbing or immobilizing ammonium ions from the stormwater, and the anammox converts the ammonium to nitrogen gas. The carriers are installable in stormwater treatment systems and/or stormwater drainage systems.

While various embodiments of the system and method have been described in detail, it is apparent that modifications and alterations of those embodiments will occur to those skilled in the art. It is to be expressly understood that such modifications and alterations are within the scope and spirit of the present disclosure. Further, it is to be understood that the phraseology and terminology used herein is for the purposes of description and should not be regarded as limiting. The use of "including," "comprising," or "having" and variations thereof herein are meant to encompass the items listed thereafter and equivalents thereof, as well as additional items. Further, it is to be understood that the claims are not necessarily limited to the specific features or actions described herein. Rather, the specific features and actions are disclosed as embodiments of implementing the claimed systems and methods.

## Claims

1. A stormwater treatment system for attracting and retaining anammox bacteria, the stormwater treatment system comprising:
a subsystem capable of receiving stormwater including ammonia, the stormwater having a variable flow rate; and
a plurality of carriers, the plurality of carriers being positioned within the stormwater treatment system to contact the ammonia in the stormwater received by the subsystem, remove a select amount of ammonia from the stormwater, and produce an exit stream with less total nitrogen content than the stormwater, wherein at least some of the plurality of carriers includes anammox bacteria,
wherein the stormwater treatment system maintains anammox bacteria growth when not in contact with the stormwater having the variable flow rate.

2. The stormwater treatment system of claim 1, wherein at least some of the plurality of carriers include zeolite and are unseeded.

3. The stormwater treatment system of claim 1, wherein at least some of the plurality of carriers include zeolite and are pre-seeded with a mixed culture enriched in anammox bacteria.

4. The stormwater treatment system of claim 1, wherein at least some of the plurality of carriers do not include zeolite and are pre-seeded with a mixed culture enriched in anammox bacteria.

5. The stormwater treatment system of claim 1, wherein the plurality of carriers includes a combination of unseeded zeolite-including carriers, zeolite-including carriers pre-seeded with anammox bacteria, and carriers that do not include zeolite and are pre-seeded with anammox bacteria.

6. The stormwater treatment system of claim 1, wherein the subsystem includes a raingarden, a stormwater treatment pond, or a stormwater collection vault or a dispersion well with at least one of an inlet, an outlet, and a storage vessel including a plurality of walls defining an inner cavity.

7. A stormwater treatment system for selectively attracting and retaining anammox bacteria, the stormwater treatment system comprising:
a plurality of hard polymer pieces capable of being suspended in a mixed-liquid system,
wherein the plurality of hard polymer pieces is capable of contacting stormwater including ammonia and having a variable flow rate, wherein the plurality of hard polymer pieces is adapted to promote biofilm growth and retention of one or more of anammox bacteria, aerobic ammonia-oxidizing bacteria (AOB), and aerobic ammonia-oxidizing archaea (AOA),
wherein the stormwater treatment system attracts and retains anammox bacteria by concentrating, on a surface of the hard polymer pieces, the ammonia for use by the anammox bacteria, and
wherein the stormwater treatment system maintains anammox bacteria growth when the hard polymer pieces are not in contact with the stormwater having the variable flow rate.

8. The stormwater treatment system of claim 7, wherein
(a) at least some of the plurality of hard polymer pieces include zeolite and are unseeded; or
(b) at least some of the plurality of hard polymer pieces include zeolite and are pre-seeded with a mixed culture enriched in one or more of anammox bacteria, AOB, and AOA; or
(c) at least some of the plurality of hard polymer pieces do not include zeolite and are pre-seeded with a mixed culture enriched in one or more of anammox bacteria, AOB, and AOA; or
(d) the plurality of hard polymer pieces include a combination of unseeded zeolite-including hard polymer pieces, zeolite-including hard polymer pieces pre-seeded with a mixed culture enriched in one or more of anammox bacteria, AOB, and AOA, and hard polymer pieces that do not include zeolite and are pre-seeded with a mixed culture enriched in one or more of anammox bacteria, AOB, and AOA.

9. The stormwater treatment system of claim 7, wherein the mixed-liquid system includes a raingarden, a stormwater treatment pond, or a stormwater collection vault or a dispersion well with at least one of an inlet, an outlet, and a storage vessel including a plurality of walls defining an inner cavity.

10. A method of treating stormwater, comprising:
contacting a plurality of carriers in a stormwater treatment system with an influent stormwater stream including at least ammonia, wherein the influent stormwater stream has a variable flow rate, and wherein at least some of the plurality of carriers includes anammox bacteria; and
recovering an exit stream with less total nitrogen content than the influent stormwater stream.

11. The method of claim 10, wherein at least some of the plurality of carriers include zeolite and are unseeded.

12. The method of claim 10, wherein
(a) at least some of the plurality of carriers include zeolite and are pre-seeded with a mixed culture enriched in anammox bacteria; or
(b) at least some of the plurality of carriers do not include zeolite and are pre-seeded with a mixed culture enriched in anammox bacteria; or
(c) the plurality of carriers includes a combination of unseeded zeolite-including carriers, zeolite-including carriers pre-seeded with anammox bacteria, and carriers that do not include zeolite and are pre-seeded with anammox bacteria.

13. The method of claim 10, wherein the stormwater treatment system includes a raingarden, a stormwater treatment pond, or a stormwater collection vault or a dispersion well with at least one of an inlet, an outlet, and a storage vessel including a plurality of walls defining an inner cavity.

14. The method of claim 10, wherein the stormwater treatment system comprises a subsystem capable of receiving the influent stormwater stream including at least ammonia, and wherein the plurality of carriers is positioned within the stormwater treatment system, and wherein the method further comprises:
contacting the ammonia in the influent stormwater stream received by the subsystem with the plurality of carriers;
removing a select amount of ammonia from the influent stormwater stream; and
producing the exit stream with less total nitrogen content than the influent stormwater stream, and
wherein the stormwater treatment system maintains anammox bacteria growth when not in contact with the influent stormwater stream having the variable flow rate.

15. The method of claim 10, wherein the stormwater treatment system comprises a plurality of hard polymer pieces capable of being suspended in a mixed-liquid system,
wherein the plurality of hard polymer pieces is capable of contacting the influent stormwater stream including at least ammonia,
wherein the plurality of hard polymer pieces is adapted to promote biofilm growth and retention of one or more of anammox bacteria, aerobic ammonia-oxidizing bacteria (AOB), and aerobic ammonia-oxidizing archaea (AOA),
wherein the stormwater treatment system attracts and retains the anammox bacteria by concentrating, on a surface of the hard polymer pieces, the ammonia for use by the anammox bacteria, and
wherein the stormwater treatment system maintains anammox bacteria growth when the hard polymer pieces are not in contact with the influent stormwater stream.
